(19) Europäisches Patentamt
European Patent Office
Office européen des brevets

(11) EP 4 691 798 A1

(12) EUROPEAN PATENT APPLICATION

(43) Date of publication:
**11.02.2026 Bulletin 2026/07**

(21) Application number: **25188326.0**

(22) Date of filing: **09.07.2025**

(51) International Patent Classification (IPC):
***B60C 1/00*** *(2006.01)* ***C08C 19/02*** *(2006.01)*
***C08C 19/22*** *(2006.01)* ***C08L 15/00*** *(2006.01)*

(52) Cooperative Patent Classification (CPC):
(C-Sets available)
**C08C 19/02; B60C 1/00; C08C 19/22; C08L 15/00**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.08.2024 JP 2024130057**

(71) Applicant: **Sumitomo Rubber Industries, Ltd.**
**Kobe-shi, Hyogo 651-0072 (JP)**

(72) Inventors:
- **HOSOYA, Hiromu**
  **Kobe-shi, 651-0072 (JP)**
- **JIANG, Lan**
  **Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

# (54) MODIFIED POLYMER, RUBBER COMPOSITION AND TIRE

(57) Provided is a modified polymer, a rubber composition, and a tire each capable of improving overall performance in terms of rubber tensile strength and compression set. The modified polymer is obtained by reacting a nitrile oxide compound having a nitrile oxide group and an ionic functional group with a multi-component copolymer A containing a conjugated diene unit and a non-conjugated olefin unit.

(52) Cooperative Patent Classification (CPC): (Cont.)

C-Sets
**C08L 15/00, C08L 15/00, C08L 45/00, C08K 3/36,**
**C08K 5/548, C08K 3/04**

## Description

### TECHNICAL FIELD

The present invention relates to modified polymers, rubber compositions, and tires.

### BACKGROUND ART

Tires have been required to have various performances including fuel economy (see Patent Literature 1). Improvement of other properties such as rubber strength and compression set is also desired.

### CITATION LIST

### PATENT LITERATURE

Patent Literature 1: JP 2019-65240 A

### SUMMARY OF INVENTION

### TECHNICAL PROBLEM

The present invention aims to solve the problem and provide a modified polymer, a resin composition, and a tire each capable of improving overall performance in terms of rubber tensile strength and compression set.

### SOLUTION TO PROBLEM

The present invention relates to a modified polymer obtained by reacting a nitrile oxide compound having a nitrile oxide group and an ionic functional group with a multi-component copolymer A containing a conjugated diene unit and a non-conjugated olefin unit.

### ADVANTAGEOUS EFFECTS OF INVENTION

The modified polymer of the present invention is obtained by reacting a nitrile oxide compound having a nitrile oxide group and an ionic functional group with a multi-component copolymer A containing a conjugated diene unit and a non-conjugated olefin unit. This modified polymer can improve overall performance in terms of rubber tensile strength and compression set.

### BRIEF DESCRIPTION OF DRAWINGS

FIG. 1 shows a schematic diagram to illustrate an exemplary method of synthesizing a nitrile oxide compound having a nitrile oxide group and a cationic group.
FIG. 2 shows examples of $^1$H-NMR (proton NMR) spectra of compound P1, compound P2, and compound P3 in the synthetic route in FIG. 1.
FIG. 3 shows an example of the result of thermogravimetric analysis during the synthesis of compound P3.
FIG. 4 shows a schematic diagram to illustrate an exemplary method of synthesizing a nitrile oxide compound having a nitrile oxide group and an anionic functional group.
FIG. 5 shows exemplary $^1$H-NMR (proton NMR) spectra of compound C, compound D, and compound E in the synthetic route in FIG. 4.
FIG. 6 shows exemplary IR spectra of compound D and compound E in the synthetic route in FIG. 4.
FIG. 7 shows an exemplary synthesis of a reaction product (modified polymer) of a nitrile oxide compound having a nitrile oxide group and an ionic functional group with a multi-component copolymer A containing a conjugated diene unit and a non-conjugated olefin unit.
FIG. 8 shows an exemplary $^1$H-NMR (proton NMR) spectrum of a modified polymer in the synthetic route in FIG. 7.

### DESCRIPTION OF EMBODIMENTS

<Modified polymer>

The modified polymer is obtained by reacting a nitrile oxide compound having a nitrile oxide group and an ionic functional group with a multi-component copolymer A containing a conjugated diene unit and a non-conjugated olefin unit.

The reason for the above-described effects is not exactly clear, but it is believed as follows.

A multi-component copolymer containing a conjugated diene unit and a non-conjugated olefin unit, such as a hydrogenated styrene-butadiene copolymer, has high ozone resistance. In particular, a multi-component copolymer with a high non-conjugated olefin unit content (for example, with a high degree of hydrogenation) can exhibit crystallinity to have high tensile strength. The use of such a multi-component copolymer in sidewalls, for example, can be expected.

However, the higher the non-conjugated olefin unit content is, the more the co-crosslinkability decreases, so that the compression set tends to decrease. Although a reduction in the non-conjugated olefin unit content increases the co-crosslinkability to improve the compression set, a lower non-conjugated olefin unit content reduces the crystallinity, unfortunately reducing the tensile strength.

To overcome the issue, a nitrile oxide compound having a nitrile oxide group and an ionic functional group is introduced into a polymer, whereby a single network including cross-linking via hydrogen bonds without sulfur cross-links is considered to be formed.

Further, combining the network with a usual rubber formed via sulfur cross-links is considered to form a rubber composition including two networks.

Cross-links via hydrogen bonds are weaker than sulfur cross-links. Therefore, upon application of strong energy, hydrogen bonds, which are more prone to breakage than sulfur cross-links, are sacrificially broken, so that input energy can be dissipated. This prevents the sulfur cross-links from breaking, presumably thereby improving rubber tensile strength. Moreover, aggregated multiple ionic functional groups can serve as cross-linking sites. Thus, even a polymer having a high non-conjugated olefin unit content presumably can achieve good compression set.

Accordingly, the use of the modified polymer is expected to improve overall performance in terms of rubber tensile strength and compression set.

The modified polymer is obtained by reacting a nitrile oxide compound (polymer modifier) having a nitrile oxide group and an ionic functional group with a multi-component copolymer A containing a conjugated diene unit and a non-conjugated olefin unit.

In the nitrile oxide compound (polymer modifier) having a nitrile oxide group and an ionic functional group, the nitrile oxide group is a group represented by the formula below. The nitrile oxide compound may contain one nitrile oxide group or two or more nitrile oxide groups.

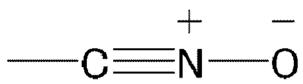

Examples of the ionic functional group in the nitrile oxide compound having a nitrile oxide group and an ionic functional group include cationic functional groups and anionic functional groups.

To better achieve the advantageous effects, the nitrile oxide compound having a nitrile oxide group and an ionic functional group desirably includes a nitrile oxide compound having a nitrile oxide group and a cationic functional group and a nitrile oxide compound having a nitrile oxide group and an anionic functional group.

The reason why the above-described effects are better achieved in this case is not exactly clear, but it is believed as follows.

When a nitrile oxide compound having a nitrile oxide group and a cationic functional group and a nitrile oxide compound having a nitrile oxide group and an anionic functional group are used, introduction of the nitrile oxide compounds each having a nitrile oxide group and an ionic functional group, which are interactive with each other, into a polymer presumably allows the polymer to have a single network including cross-linking via hydrogen bonds without sulfur cross-links. Further, the cross-links via hydrogen bonds prevent sulfur cross-links from breaking, presumably thereby improving rubber tensile strength. Consequently, overall performance in terms of rubber tensile strength and compression set may be significantly improved.

The ionic functional group is desirably introduced to an end of the nitrile oxide compound. The nitrile oxide compound may have one ionic functional group or two or more ionic functional groups. The nitrile oxide compound may have one type or two or more types of ionic functional groups. For example, the nitrile oxide compound may be a nitrile oxide compound having a nitrile oxide group and a cationic functional group, a nitrile oxide compound having a nitrile oxide group and an anionic functional group, or a nitrile oxide compound having a nitrile oxide group, a cationic functional group, and an anionic functional group.

Examples of the cationic functional group include monovalent cationic groups such as an amino group, an ammonium group, an imino group, and salts of these groups. Examples of the atom or atomic group constituting the salts

include a hydroxide ion, a halogen ion, a carboxylate ion, a sulfonate ion, a fluorine ion, a cyanide ion, a silicate ion, a borate ion, and a condensed phosphate ion. The amino group listed as an example of the cationic functional group is not limited to $-NH_2$ and includes a substituted amino group and a cyclic amino group. Examples of the substituted amino group include a monoalkylamino group, a dialkylamino group, a monoarylamino group, a diarylamino group, and an alkylarylamino group. Examples of the cyclic amino group include a pyrrolidine group, a piperidine group, a piperazine group, a morpholine group, a pyrrole group, a pyrazole group, an imidazole group, a pyridine group, a pyridazine group, a pyrimidine group, a pyrazine group, an oxazole group, an isoxazole group, a thiazole group, an isothiazole group, a pyrrolidone group, a piperidone group, a 3-morpholinone group, a morpholine dione group, and substituted groups of these groups. Examples of the substituent include halogen groups and monovalent hydrocarbon groups such as an alkyl group or an alkenyl group. To better achieve the advantageous effect, a cyclic amino group is preferred, and a pyridine group or a substituted pyridine group is more preferred.

Typical examples of optionally substituted pyridine groups include 2-pyridyl, 3-pyridyl, and 4-pyridyl represented by the following formulas:

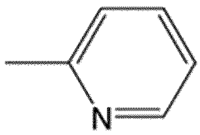
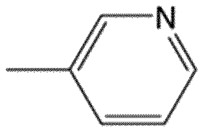
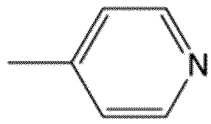

and $-CH_3$-substituted 3-pyridine represented by the following formula:

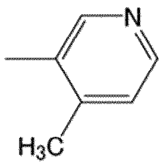
.

Examples of the anionic functional group include halogen groups and acidic functional groups. Examples of the halogen groups include a fluoro group, a chloro group, a bromo group, and an iodo group. Examples of the acidic functional groups include a hydroxyl group, a carboxylic acid group, a sulfonic acid group, a sulfuric acid group, a phosphonic acid group, a phosphoric acid group, a phosphinic acid group, a maleic acid group, acid anhydride groups (e.g., maleic anhydride), a fumaric acid group, an itaconic acid group, an acrylic acid group, a methacrylic acid group, and a mercapto group. Of these, a carboxylic acid group (carboxyl group) is preferred.

The nitrile oxide compound may be any compound having a nitrile oxide group and an ionic functional group. Examples include compounds represented by the following formula:

$$X\text{-}C{\equiv}N^{+}\text{-}O^{-}$$

wherein X represents a monovalent hydrocarbon group having an ionic functional group.

X may be any monovalent hydrocarbon group containing an ionic functional group. Examples of the ionic functional group in X include the ionic functional groups described above. Preferably, the ionic functional group in X is present at an end of X as in X represented by $-(CH_2)_5-A$ (A: ionic functional group).

The monovalent hydrocarbon group in X (a monovalent hydrocarbon group containing an ionic functional group) refers to a monovalent hydrocarbon group that constitutes the skeleton of X and corresponds to a monovalent hydrocarbon group resulting from replacing the ionic functional group in X by a hydrogen atom. For example, the monovalent hydrocarbon group in X that is a group represented by $-(CH_2)_5-COOH$ (COOH: ionic functional group) is $-(CH_2)_5-H$.

Examples of the monovalent hydrocarbon group in X include a substituted or unsubstituted monovalent hydrocarbon group which may be linear, branched, or cyclic, preferably cyclic. The monovalent hydrocarbon group in X may contain a heteroatom. Non-limiting examples of the substituent include known groups such as a hydroxyl group and a halogen group (e.g., -Cl, -Br). Non-limiting examples of the heteroatom include an oxygen atom and a nitrogen atom. The monovalent hydrocarbon group in X may contain one or more substituents or one or more heteroatoms.

The carbon number of the monovalent hydrocarbon group in X is preferably 3 or more, more preferably 6 or more, while it is preferably 30 or less, more preferably 26 or less, still more preferably 20 or less.

Examples of the monovalent hydrocarbon group in X include a substituted or unsubstituted linear alkyl group, a substituted or unsubstituted branched alkyl group, a substituted or unsubstituted cyclic alkyl group, a substituted or unsubstituted aryl group, and a substituted or unsubstituted aralkyl group, each optionally containing a heteroatom. The monovalent hydrocarbon group in X may be a group in which two or more of a substituted or unsubstituted linear alkyl

group, a substituted or unsubstituted branched alkyl group, a substituted or unsubstituted cyclic alkyl group, a substituted or unsubstituted aryl group, and a substituted or unsubstituted aralkyl group, each optionally containing a heteroatom, are bound to each other (e.g., a group in which a substituted or unsubstituted linear alkyl group optionally containing a heteroatom is bound to a substituted or unsubstituted aryl group optionally containing a heteroatom).

Examples of the substituted or unsubstituted linear or branched alkyl group optionally containing a heteroatom as the monovalent hydrocarbon group in X include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, a decyl group, and these groups each containing a heteroatom. Examples of the substituted or unsubstituted cyclic alkyl group optionally containing a heteroatom include a cyclopropyl group, a cyclobutyl group, a cyclopentyl group, a cyclohexyl group, a cycloheptyl group, a cyclooctyl group, an adamanthyl group, a 1-ethylcyclopentyl group, a 1-ethylcyclohexyl group, and these groups each containing a heteroatom. Examples of the substituted or unsubstituted aryl group optionally containing a heteroatom include a phenyl group, a tolyl group, a xylyl group, a biphenyl group, a naphthyl group, an anthryl group, a phenanthryl group, and these groups each containing a heteroatom. Examples of the substituted or unsubstituted aralkyl group optionally containing a heteroatom include a benzyl group, a phenethyl group, and these groups each containing a heteroatom. Examples the monovalent hydrocarbon group in X also include a group in which these groups are bound to each other (e.g., a group in which a substituted or unsubstituted pentyl group optionally containing a heteroatom is bound to a substituted or unsubstituted naphthyl group optionally containing a heteroatom).

The monovalent hydrocarbon group in X is preferably a substituted or unsubstituted linear alkyl group optionally containing a heteroatom, a substituted or unsubstituted aryl group optionally containing a heteroatom, or a group in which a substituted or unsubstituted linear alkyl group optionally containing a heteroatom is bound to a substituted or unsubstituted aryl group optionally containing a heteroatom.

The compound having a nitrile oxide group and an ionic functional group is preferably a compound including a cyclic structure, more preferably a compound having an aromatic ring. Specific examples of the aromatic ring include a benzene ring, a naphthalene ring, an anthracene ring, a phenanthrene ring, a fluorene ring, a triphenylene ring, a naphthacene ring, a biphenyl ring, a bisphenol ring, and a terphenyl ring (the three benzene rings may be linked in any linking manner). Of these, a compound having a benzene ring or a naphthalene ring is preferred, and a compound having a naphthalene ring is more preferred.

Suitable examples of the nitrile oxide compound having a nitrile oxide group and an ionic functional group include compounds represented by the following formula (compounds having a naphthalene ring):

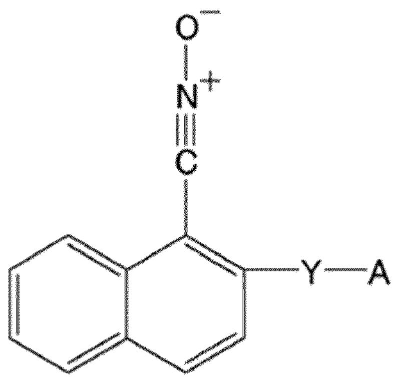

wherein A represents a monovalent ionic functional group, and Y represents a substituted or unsubstituted divalent hydrocarbon group optionally containing a heteroatom.

Examples of A (monovalent ionic functional group) include the monovalent ionic functional groups described above.

Y (a substituted or unsubstituted divalent hydrocarbon group optionally containing a heteroatom) may be linear, branched, or cyclic. Examples of the heteroatom and substituent in Y include the heteroatoms and the substituents described above. Y may contain one or two or more of the substituents or one or two or more of the heteroatoms.

The carbon number of the divalent hydrocarbon group as Y is preferably 1 or more, more preferably 2 or more, still more preferably 3 or more, while it is preferably 20 or less, more preferably 12 or less, still more preferably 10 or less.

Examples of Y (a substituted or unsubstituted divalent hydrocarbon group optionally containing a heteroatom) include a substituted or unsubstituted alkylene group optionally containing a heteroatom, a substituted or unsubstituted alkenylene group optionally containing a heteroatom, a substituted or unsubstituted cycloalkylene group optionally containing a heteroatom, a substituted or unsubstituted cycloalkylalkylene group optionally containing a heteroatom, a substituted or unsubstituted arylene group optionally containing a heteroatom, a substituted or unsubstituted aralkylene

group optionally containing a heteroatom, and a substituted or unsubstituted oxyalkylene group optionally containing a heteroatom.

Examples of the substituted or unsubstituted alkylene group optionally containing a heteroatom include a methylene group, an ethylene group, a trimethylene group, a tetramethylene group, a pentamethylene group, a hexamethylene group, an octylene group, a nonylene group, a decylene group, a 1,2-propylene group, and these groups each containing a heteroatom. Examples of the substituted or unsubstituted alkenylene group optionally containing a heteroatom include a vinylene group, a 1-propenylene group, a 2-propenylene group, and these groups each containing a heteroatom. Examples of the substituted or unsubstituted cycloalkylene group optionally containing a heteroatom include a cyclohexylene group and a cyclohexylene group containing a heteroatom. Examples of the substituted or unsubstituted cycloalkylalkylene group optionally containing a heteroatom include a cyclohexylmethylene group and a cyclohexylmethylene group containing a heteroatom. Examples of the substituted or unsubstituted arylene group optionally containing a heteroatom include a phenylene group, a tolylene group, a xylylene group, and these groups each containing a heteroatom. Examples of the substituted or unsubstituted aralkylene group optionally containing a heteroatom include a benzylidene group and a benzylidene group containing a heteroatom. Examples of the substituted or unsubstituted oxyalkylene group optionally containing a heteroatom include an oxyethylene group, an oxypropylene group, an oxybutylene group, an oxytetramethylene group, and these groups each containing a heteroatom.

The compound having a naphthalene ring represented by the above formula is a suitable example. The substitution position of the group represented by $-C{\equiv}N^{+}-O^{-}$ or -Y-A in the naphthalene ring is not limited and may each be any of positions 1 to 8. Preferably, position 1 or position 2 is substituted with $-C{\equiv}N^{+}-O^{-}$ or -Y-A.

Next, a method of synthesizing the nitrile oxide compound having a nitrile oxide group and an ionic functional group is described.

The synthesis method described below is an exemplary method of synthesizing the nitrile oxide compound having a nitrile oxide group and an ionic functional group. The nitrile oxide compound is not limited to one obtained by the synthetic method and includes compounds obtainable by any synthetic method that can produce the nitrile oxide compound.

First, a compound containing a hydroxyl group and an aldehyde group as a starting substance is reacted with a compound into which an ionic functional group can be introduced. If necessary, a group derived from the compound into which an ionic functional group can be introduced in the obtained substance is substituted with the ionic functional group.

Next, the aldehyde group in the resulting compound is converted to a group represented by -CH=N-OH. Further, the group represented by -CH=N-OH is converted to a group represented by $-C{\equiv}N^{+}-O^{-}$, whereby the nitrile oxide compound having a nitrile oxide group and an ionic functional group can be synthesized.

The reaction may proceed in an organic solvent, water, or a solvent-free environment. The organic solvent is not limited but is preferably an organic solvent which can easily dissolve both a compound to be reacted and a reacting compound. Non-limiting examples of the organic solvent include toluene, mesitylene, chloroform ($CHCl_3$), alcohol, and tetrahydrofuran (THF). Optionally, a catalyst may be used. Non-limiting examples of the catalyst include N,N-dimethyl formamide (DMF), dimethyl sulfoxide (DMSO), and triethyl amine (TEA). The amounts of the solvent and the catalyst may be set to be appropriate for the compounds such that the reaction can proceed. The temperature and the duration of the reaction may be set to be appropriate for the compounds such that the reaction can proceed. For example, the reaction temperature is 10°C to 100°C, preferably 20°C to 80°C. For example, the duration of the reaction is 1 to 200 hours, preferably 3 to 100 hours.

As a specific compound synthesis example of synthesizing a nitrile oxide compound having a nitrile oxide group and a cationic functional group, the nitrile oxide compound having a nitrile oxide group and a cationic functional group, which is denoted as compound P3, can be synthesized through the synthetic route in FIG. 1.

First, compound S (a compound containing a hydroxyl group and an aldehyde group) as a starting substance is reacted with a compound ($C_5H_4N-CH_2-Cl$ wherein $C_5H_4N$ represents 2-pyridyl) into which a cationic functional group can be introduced to obtain compound P1.

The aldehyde group in the produced compound P1 is converted to a group represented by -CH=N-OH to synthesize compound P2. The group represented by -CH=N-OH in the compound P2 is converted to a group represented by $-C{\equiv}N^{+}-O^{-}$ to synthesize compound P3 (a nitrile oxide compound having a nitrile oxide group and a cationic functional group).

FIG. 2 shows examples of $^{1}H$-NMR (proton NMR) spectra of compound P1, compound P2, and compound P3 in the synthetic route in FIG. 1. FIG. 3 shows an example of the result of thermogravimetric analysis (TGA) during the synthesis of compound P3 (a nitrile oxide compound having a nitrile oxide group and a cationic functional group (CNO-Py)). The spectra in FIG. 2 and the result of TGA in FIG. 3 demonstrate that the compounds P1, P2, and P3 are synthesized in the synthetic route in FIG. 1.

Further, as a specific compound synthesis example of synthesizing a nitrile oxide compound having a nitrile oxide group and an anionic functional group, the nitrile oxide compound having a nitrile oxide group and an anionic functional group, which is denoted as compound E, can be synthesized through the synthetic route in FIG. 4.

First, compound A (a compound having a hydroxyl group and an aldehyde group) as a starting substance is reacted with a compound (Br-$(CH_2)_5$-C(=O)-O-$CH_2CH_3$) into which an anionic functional group can be introduced to obtain compound B. The -C(=O)-O-$CH_2CH_3$ portion (a group derived from the compound into which an anionic functional group can be introduced) in the compound B is converted to - C(=O)-OH (anionic functional group: carboxyl group) to obtain compound C.

The aldehyde group in the produced compound C is converted to a group represented by -CH=N-OH to synthesize compound D. The group represented by -CH=N-OH in the compound D is converted to a group represented by -C≡$N^+$-$O^-$ to synthesize compound E (a nitrile oxide compound having a nitrile oxide group and an anionic functional group).

FIG. 5 shows exemplary $^1$H-NMR (proton NMR) spectra of compound C, compound D, and compound E in the synthetic route in FIG. 4.

FIG. 6 shows exemplary IR spectra of compound D and compound E in the synthetic route in FIG. 4. The spectra in FIG. 5 indicate synthesis of compound C, compound D, and compound E. The spectra in FIG. 6 indicate synthesis of compound D and compound E.

In the modified polymer obtained by reacting the nitrile oxide compound (polymer modifier) having a nitrile oxide group and an ionic functional group with the multi-component copolymer A containing a conjugated diene unit and a non-conjugated olefin unit, the multi-component copolymer A may be any polymer that contains a conjugated diene unit and a non-conjugated olefin unit, and it may contain other monomer units. Such other monomer units are desirably aromatic vinyl units.

The multi-component copolymer A may be either a polymer that is solid at 25°C or a polymer that is liquid at 25°C.

The conjugated diene unit in the multi-component copolymer A is a structural unit derived from a conjugated diene compound. Examples of the conjugated diene compound include 1,3-butadiene, isoprene, 1,3-pentadiene, 2,3-dimethylbutadiene, 2-phenyl-1,3-butadiene, and 1,3-hexadiene. Each of these may be used alone, or two or more of these may be used in combination. Of these, 1,3-butadiene and isoprene are preferred, and 1,3-butadiene is more preferred.

The non-conjugated olefin unit in the multi-component copolymer A is a structural unit derived from a non-conjugated olefin. Examples of the non-conjugated olefin include ethylene, propylene, 1-butene, 1-pentene, 1-hexene, 1-heptene, and 1-octene. Each of these may be used alone, or two or more of these may be used in combination. Of these, ethylene, propylene, and 1-butene are preferred, and ethylene is more preferred.

An aromatic vinyl unit optionally introduced in the multi-component copolymer A is a structural unit derived from an aromatic vinyl compound. Examples of the aromatic vinyl compound include styrene, α-methylstyrene, 1-vinylnaphthalene, 3-vinyltoluene, ethyl vinylbenzene, divinylbenzene, 4-cyclohexylstyrene, and 2,4,6-trimethylstyrene. Each of these may be used alone, or two or more of these may be used in combination. Of these, styrene and α-methylstyrene are preferred, and styrene is more preferred.

For example, the multi-component copolymer A can be prepared by copolymerizing a conjugated diene compound, a non-conjugated olefin, and optionally an aromatic vinyl compound or by copolymerizing a conjugated diene compound and optionally an aromatic vinyl compound, alternatively, copolymerizing a conjugated diene compound, a non-conjugated olefin, and optionally an aromatic vinyl compound, and then partly converting conjugated diene units by hydrogenation to non-conjugated olefin units. In other words, the multi-component copolymer A may be a copolymer of a conjugated diene compound, a non-conjugated olefin, and optionally an aromatic vinyl compound or a hydrogenated product of a copolymer (hydrogenated copolymer) of a conjugated diene compound and optionally an aromatic vinyl compound or a hydrogenated product of a copolymer (hydrogenated copolymer) of a conjugated diene compound, a non-conjugated olefin, and optionally an aromatic vinyl compound. Each of these may be used alone, or two or more of these may be used in combination.

To better achieve the advantageous effects, the multi-component copolymer A is preferably a hydrogenated product of a polymer or copolymer of a conjugated diene compound and optionally an aromatic vinyl compound, more preferably a hydrogenated styrene-butadiene copolymer (hydrogenated SBR).

The reason why the above-described effects are better achieved when the multi-component copolymer A is a hydrogenated copolymer is not exactly clear. Presumably, due to hydrogenation, the hydrogenated copolymer exhibits crystallinity to have high tensile strength.

In the case of a hydrogenated styrene-butadiene copolymer (hydrogenated SBR), the styrene units therein can provide high rubber tensile strength and good compression set.

Consequently, overall performance in terms of rubber tensile strength and compression set may be significantly improved.

To better achieve the advantageous effects, the multi-component copolymer A is desirably a polymer containing a conjugated diene unit, a non-conjugated olefin unit, and an aromatic vinyl unit.

From the same point of view, the multi-component copolymer A is preferably a copolymer containing an ethylene unit and a conjugated diene unit or a copolymer containing an ethylene unit, a conjugated diene unit, and an aromatic vinyl unit, more preferably a copolymer containing an ethylene unit and a 1,3-butadiene unit or a copolymer containing an

ethylene unit, a 1,3-butadiene unit, and a styrene unit.

The reason why the above-described effects are better achieved by the use of the polymer containing a conjugated diene unit, a non-conjugated olefin unit, and an aromatic vinyl unit is not exactly clear. Presumably, when a polymer containing a conjugated diene unit, a non-conjugated olefin unit, and an aromatic vinyl unit is used, the aromatic vinyl unit can provide high rubber tensile strength and good compression set.

The multi-component copolymer A may be prepared through any polymerization method including random polymerization and block polymerization. The polymerization method is preferably random polymerization.

When the multi-component copolymer A is a hydrogenated copolymer, the hydrogenation may be performed by any method under any reaction condition, including known methods and known conditions. Usually, the hydrogenation is performed at 20°C to 150°C under a hydrogen pressure of 0.1 to 10 MPa in the presence of a hydrogenation catalyst. Other methods and conditions related to production are not limited either. For example, those described in WO 2016/039005 may be used.

When the multi-component copolymer A is a hydrogenated copolymer, the degree of hydrogenation based on 100 mol% of the total conjugated diene units before hydrogenation is preferably 60 mol% or higher, more preferably 80 mol% or higher, still more preferably 88 mol% or higher, further preferably 90 mol% or higher, particularly preferably 95 mol% or higher, while it is preferably 99 mol% or lower, more preferably 98 mol% or lower. When the degree of hydrogenation is within the range indicated above, the advantageous effects tend to be better achieved.

In view of strain recovery ratio, the degree of hydrogenation is preferably 95 mol% or lower, more preferably 88 mol% or lower, still more preferably 60 mol% or lower.

Here, the degree of hydrogenation can be calculated from the rate of decrease in the unsaturated bond signals in the 1H-NMR spectrum measured.

The reason why the above-described effects are better achieved when the degree of hydrogenation is high is not exactly clear. Presumably, a high degree of hydrogenation increases the crystallinity, thereby providing high tensile strength. Consequently, overall performance in terms of rubber tensile strength and compression set may be significantly improved.

The conjugated diene unit content based on 100 mol% of the total structural units of the multi-component copolymer A is preferably 2.0 mol% or higher, more preferably 4.0 mol% or higher, still more preferably 9.5 mol% or higher, particularly preferably 32.0 mol% or higher, while it is preferably 50.0 mol% or lower, more preferably 40.0 mol% or lower, still more preferably 35.0 mol% or lower. When the conjugated diene unit content is within the range indicated above, the advantageous effects tend to be better achieved.

In view of the glass transition temperature, the content is preferably 32.0 mol% or lower, more preferably 9.5 mol% or lower, still more preferably 4.0 mol% or lower.

The non-conjugated olefin unit content based on 100 mol% of the total structural units of the multi-component copolymer A is preferably 48 mol% or higher, more preferably 70 mol% or higher, still more preferably 76 mol% or higher, while it is preferably 99 mol% or lower, more preferably 98 mol% or lower, still more preferably 97 mol% or lower. When the non-conjugated olefin unit content is within the range indicated above, the advantageous effects tend to be better achieved.

In view of strain recovery ratio, the content is preferably 76 mol% or lower, more preferably 70 mol% or lower, still more preferably 48 mol% or lower.

The aromatic vinyl unit content based on 100 mol% of the total structural units of the multi-component copolymer A is preferably 5 mol% or higher, more preferably 15 mol% or higher, still more preferably 20 mol% or higher, while it is preferably 50 mol% or lower, more preferably 45 mol% or lower, still more preferably 40 mol% or lower. When the aromatic vinyl unit content is within the range indicated above, the advantageous effects tend to be better achieved.

In view of strain recovery ratio, the content is preferably 30 mol% or lower, more preferably 20 mol% or lower.

The multi-component copolymer A may be an unmodified copolymer or a modified copolymer.

Examples of the multi-component copolymer A include a chain end-modified copolymer obtained by modifying at least one chain end of a copolymer by a compound (modifier) having the functional group (i.e., a chain end-modified copolymer terminated with the functional group); a backbone-modified copolymer having the functional group in the backbone; a backbone- and chain end-modified copolymer having the functional group in both the backbone and chain end(s) (e.g., a backbone- and chain end-modified copolymer in which the backbone has the functional group and at least one chain end is modified by the modifier); and a chain end-modified copolymer into which a hydroxyl group or an epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted.

Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The multi-component copolymer A has a weight average molecular weight (Mw) of preferably 100000 or more, more preferably 150000 or more, still more preferably 200000 or more, particularly preferably 400000 or more. The Mw is preferably 2000000 or less, more preferably 1500000 or less, still more preferably 1000000 or less, particularly preferably 600000 or less. When the Mw is within the range indicated above, the advantageous effects tend to be better achieved.

The weight average molecular weight (Mw) can be determined with a gel permeation chromatograph (GPC) (GPC-8000 series available from Tosoh Corporation, detector: differential refractometer, column: TSKgel SuperMultipore HZ-M available from Tosoh Corporation). The resulting value is calibrated with polystyrene standards.

The reaction between the nitrile oxide compound having a nitrile oxide group and an ionic functional group and the multi-component copolymer A containing a conjugated diene unit and a non-conjugated olefin unit may be performed by any method that can cause the reaction. For example, the nitrile oxide compound is reacted with the multi-component copolymer A as needed, such as through dissolution or energy application. This can cause a cycloaddition reaction between the nitrile oxide group and the carbon-carbon double bonds in the main chain of the multicomponent copolymer A, allowing a reaction to form a five-membered ring to proceed.

The reaction between the nitrile oxide compound and the multi-component copolymer A may be performed in an organic solvent, in water, or without any solvent, although not limited thereto. The organic solvent is not limited, and it is preferably an organic solvent in which both the nitrile oxide compound and the multi-component copolymer A are easily dissolved. Specific examples of the organic solvent include those described above. The temperature and duration of the reaction may be set to be appropriate for the nitrile oxide compound and the multi-component copolymer A such that the reaction can proceed.

As a specific compound synthesis example, a reaction product (modified polymer) of the nitrile oxide compound with the multi-component copolymer A can be synthesized by the synthetic route in FIG. 7.

FIG. 7 shows a synthetic route of synthesizing a reaction product (modified polymer) of the nitrile oxide compound having a nitrile oxide group and a cationic functional group and the nitrile oxide compound having a nitrile oxide group and an anionic functional group with the multi-component copolymer A, as an exemplary synthesis of a reaction product (modified polymer) of the nitrile oxide compound with the multi-component copolymer A.

Specifically, FIG. 7 shows a synthetic example of a reaction product (modified polymer) of the Compound P3, the compound E (nitrile oxide compound), and hydrogenated SBR (multi-component copolymer A) synthesized by first reacting the nitrile oxide compound (the compound E) having a nitrile oxide group and an anionic functional group with hydrogenated SBR and then with the nitrile oxide compound (the compound P3) having a nitrile oxide group and a cationic functional group.

In detail, the compound E (a nitrile oxide compound having a nitrile oxide group and an anionic functional group) is kneaded with hydrogenated SBR at 70°C for 15 minutes to obtain a modified polymer having an anionic functional group.

Next, the obtained modified polymer having an anionic functional group is kneaded with the compound P3 (a nitrile oxide compound having a nitrile oxide group and a cationic functional group) at 70°C for 15 minutes, whereby a target reaction product (modified polymer), i.e., a reaction product of the compound P3, the compound E (the nitrile oxide compound), and the hydrogenated SBR (the multi-component copolymer A) can be obtained.

FIG. 8 shows an exemplary $^{1}$H-NMR (proton NMR) spectrum of a polymer in the synthetic route in FIG. 7. FIG. 8 shows that the nitrile oxide compound (the compound E) having a nitrile oxide group and an anionic functional group, the nitrile oxide compound (the compound P3) having a nitrile oxide group and a cationic functional group, and the hydrogenated SBR are reacted to synthesize a modified polymer having an anionic functional group and a cationic functional group.

The modified polymer has a glass transition temperature (Tg) of preferably higher than -50°C, more preferably -35°C or higher, still more preferably -20°C or higher, further preferably -10°C or higher. The upper limit of the Tg is preferably 5°C or lower, more preferably 0°C or lower, still more preferably -3°C or lower. When the Tg is within the range indicated above, the advantageous effects tend to be better achieved.

In view of tire rubbers, the Tg is preferably -10°C or lower, more preferably -20°C or lower, still more preferably -35°C or lower.

Herein, the glass transition temperature (Tg) is measured in accordance with JIS-K 7121:1987 at a temperature increase rate of 10°C /min using a differential scanning calorimeter.

<Rubber composition>

(Rubber component)

As described above, the modified polymer may be either a polymer that is solid at 25°C or a polymer that is liquid at 25°C, and it is desirably a polymer that is solid at 25°C. A polymer that is solid at 25°C is suitably used as a rubber

component of the rubber composition. The use of the modified polymer as a rubber component improves overall performance in terms of rubber tensile strength and compression set.

The reason why the above-described effects are better achieved when the modified polymer is used as a rubber component is not exactly clear, but it is believed as follows.

Introducing a nitrile oxide compound having a nitrile oxide group and an ionic functional group into a polymer is considered to form a single network including cross-linking via hydrogen bonds without sulfur cross-links.

Further, combining the network with a rubber formed via usual sulfur cross-links is considered to form a rubber composition including two networks.

Cross-links via hydrogen bonds are weaker than sulfur cross-links. Therefore, upon application of strong energy, hydrogen bonds, which are more prone to breakage than sulfur cross-links, are sacrificially broken, so that input energy can be dissipated. This prevents the sulfur cross-links from breaking, presumably thereby improving rubber tensile strength. Moreover, aggregated multiple ionic functional groups can serve as cross-linking sites. Thus, even a polymer having a high non-conjugated olefin unit content presumably can achieve good compression set.

Accordingly, the use of the modified polymer as a rubber component is expected to improve overall performance in terms of rubber tensile strength and compression set.

When the rubber composition contains the modified polymer as a rubber component, the modified polymer may be a composition prepared by mixing a modified polymer synthesized by the above-described production method in advance with other components or may be a composition prepared by kneading the multi-component copolymer A and the nitrile oxide compound having a nitrile oxide group and an ionic functional group optionally together with other components under the above-described kneading conditions such that the composition contains a modified polymer synthesized through a reaction between the multi-component copolymer A and the nitrile oxide compound during the kneading.

When the rubber composition contains the modified polymer as a rubber component, the rubber composition contains the modified polymer and optionally rubber components such as other rubbers.

Here, the term "rubber component" generally refers to a polymer having a weight average molecular weight (Mw) of 10000 or more and which is not extracted with acetone. The rubber component is solid at room temperature (25°C). The rubber component contributes to cross-linking.

When the rubber composition contains the modified polymer as a rubber component, the amount of the modified polymer (the amount of the modified polymer obtained by reacting the nitrile oxide compound having a nitrile oxide group and an ionic functional group with the multi-component copolymer A containing a conjugated diene unit and a non-conjugated olefin unit) based on 100% by mass of rubber component(s) is preferably 5% by mass or more, more preferably 20% by mass or more, still more preferably 50% by mass or more, while it is preferably 90% by mass or less, more preferably 70% by mass or less, still more preferably 60% by mass or less. When the amount is within the range indicated above, the advantageous effects tend to be better achieved.

In view of strain recovery ratio, the amount is preferably 5% by mass or more, more preferably 10% by mass or more, while it is preferably 50% by mass or less, more preferably 20% by mass or less.

Here, in the case where one or two or more types of the multi-component copolymer A, one or two or more types of the nitrile oxide compound having a nitrile oxide group and an ionic functional group (a cationic functional group, an anionic functional group), and optionally other components are kneaded under, for example, the above-described conditions, so that multi-component copolymer(s) A is/are reacted with the nitrile oxide compound(s) to synthesize two or more types of modified polymers, the amount of each modified polymer refers to the amount of the modified polymer proportionated according to the percentages of the two or more types of the multi-component copolymers A. For example, when two types of the multi-component copolymer A (hydrogenated SBR: 60 parts by mass, hydrogenated BR: 40 parts by mass), 5 parts by mass of the nitrile oxide compound having a nitrile oxide group and a cationic functional group, 5 parts by mass of the nitrile oxide compound having a nitrile oxide group and an anionic functional group, and optionally other components are kneaded to produce a rubber composition containing modified hydrogenated SBR and modified hydrogenated BR which are generated during the kneading, the percentage of the modified hydrogenated SBR is 66 parts by mass ($= (60 + 40 + 5 + 5) \times 60/(60 + 40)$) and the percentage of the modified hydrogenated BR is 44 parts by mass ($= (60 + 40 + 5 + 5) \times 40/(60 + 40)$).

To better achieve the advantageous effects, the rubber composition desirably further contains a multi-component copolymer B containing a conjugated diene unit and a non-conjugated olefin unit as a rubber component other than the modified polymer.

The reason why the above-described effects are better achieved when the multi-component copolymer B is used is not exactly clear, but it is believed as follows. The use of the multi-component copolymer B prevents the sulfur cross-links from breaking, presumably thereby improving rubber tensile strength. Accordingly, the overall performance in terms of rubber tensile strength and compression set is expected to be improved.

Examples of the multi-component copolymer B include the examples of the multi-component copolymer A described above.

To better achieve the advantageous effects, the multi-component copolymer B is preferably a hydrogenated

product of a polymer or copolymer of a conjugated diene compound and optionally an aromatic vinyl compound, more preferably a hydrogenated styrene-butadiene copolymer (hydrogenated SBR).

To better achieve the advantageous effects, the multi-component copolymer B is preferably a copolymer containing an ethylene unit and a conjugated diene unit or a copolymer containing an ethylene unit, a conjugated diene unit, and an aromatic vinyl unit, more preferably a copolymer containing an ethylene unit and a 1,3-butadiene unit or a copolymer containing an ethylene unit, a 1,3-butadiene unit, and a styrene unit.

The amount of the multi-component copolymer B based on 100% by mass of rubber component(s) in the rubber composition is preferably 20% by mass or more, more preferably 50% by mass or more, still more preferably 80% by mass or more, while it is preferably 95% by mass or less, more preferably 90% by mass or less. When the amount is within the range indicated above, the advantageous effects tend to be better achieved.

In view of rubber tensile strength, the amount is preferably 10% by mass or more, more preferably 20% by mass or more, while it is preferably 80% by mass or less, more preferably 50% by mass or less.

The rubber composition may contain a different rubber component other than the modified polymer and the multi-component copolymer B. Like the multi-component copolymer A, such a rubber component may be an unmodified rubber or a modified rubber. Examples of the functional group introduced in the modified rubber include functional groups that can be introduced into the multi-component copolymer A described above.

When the rubber composition contains other rubber components such as the multi-component copolymer B in addition to the modified polymer, desirably, hydrogen bonds and sulfur cross-links are formed in the rubber composition. This tends to better provide the advantageous effects.

The reason why the above-described effects are better achieved when hydrogen bonds and sulfur cross-links are formed in the rubber composition is not exactly clear, but it is believed as follows.

Introducing a nitrile oxide compound having a nitrile oxide group and an ionic functional group into a polymer is considered to form a single network including cross-linking via hydrogen bonds without sulfur cross-links.

Further, combining the network with a rubber formed via usual sulfur cross-links is considered to form a rubber composition including two networks.

Accordingly, as described above, the overall performance in terms of rubber tensile strength and compression set is expected to be improved.

Examples of the different rubber component include a diene-based rubber. Examples of the diene-based rubber include an isoprene-based rubber, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of the rubber component also include fluororubbers. Each of these may be used alone, or two or more of these may be used in combination. Modified or hydrogenated products of these rubber components are also usable. Extended rubbers extended with oils, resins, liquid rubber components, or the like are usable as well. Of these, an isoprene-based rubber, BR, or SBR is preferred.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

The BR is not limited. Examples include high-cis BR having a high cis content, BR containing syndiotactic polybutadiene crystals, and BR synthesized using rare earth catalysts (rare earth-catalyzed BR). Each of these may be used alone, or two or more of these may be used in combination. In particular, BR preferably includes high-cis BR having a cis content of 90% by mass or higher. The cis content is more preferably 95% by mass or higher. Here, the cis content can be measured by infrared absorption spectrometry.

Herein, when one type of BR is used, the cis content of the BR refers to the cis content of the one BR, while when multiple types of BR are used, it refers to the average cis content.

The average cis content of BR can be calculated using the expression: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either unmodified BR or modified BR. Examples of the modified BR include modified BR into which the functional groups listed for the multi-component copolymer A have been introduced. The BR may also be a hydrogenated polybutadiene polymer (hydrogenated BR).

Examples of usable BR include products available from UBE Corporation, JSR Corporation, Asahi Kasei Corp., Zeon Corporation, and other manufacturers.

Any SBR may be used. Examples include emulsion-polymerized styrene-butadiene rubbers (E-SBR) and

solution-polymerized styrene-butadiene rubbers (S-SBR). Each of these may be used alone or in combinations of two or more.

The styrene content of the SBR is preferably 5% by mass or higher, more preferably 20% by mass or higher, still more preferably 23.5% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by pyrolysis gas chromatography.

When one type of SBR is used, the styrene content of the SBR refers to the styrene content of the one SBR, while when multiple types of SBR are used, it refers to the average styrene content.

The average styrene content of the SBR can be calculated using the expression: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl bond content of the SBR is preferably 30% by mass or higher, more preferably 40% by mass or higher, still more preferably 50% by mass or higher. The vinyl bond content is preferably 70% by mass or lower, more preferably 65% by mass or lower, still more preferably 60% by mass or lower. When the vinyl bond content is within the range indicated above, the advantageous effect tends to be better achieved.

Herein, the vinyl bond content (1,2-butadiene unit content) can be measured by pyrolysis gas chromatography.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the expression: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified SBR or modified SBR. Examples of the modified SBR include modified SBR into which the functional groups listed for the multi-component copolymer A have been introduced. The SBR may also be a hydrogenated styrene-butadiene copolymer (hydrogenated SBR).

The SBR may be a SBR product manufactured or sold by Sumitomo Chemical Co., Ltd., JSR Corporation, Asahi Kasei Corporation, Zeon Corporation, or other manufacturers or may be SBR synthesized by a known method.

The raw materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and/or styrene derived from recycled materials (recycled styrene) are/is preferably used as a raw material.

The recycled monomers may be produced by any method. For example, a recycled monomer may be synthesized from naphtha derived from a recycled material that is obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the raw materials (monomers) of synthetic rubbers such as IR, SBR, and BR may be derived from biomass. Herein, the term "biomass" refers to substances derived from natural resources such as plants. Non-limiting examples of the biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be

caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymers include styrene-butadiene rubber synthesized using biomass-derived butadiene and biomass-derived styrene.

Whether the raw material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass currently often fails to exhibit a value of 100 in a usual state and is thus expected to show roughly about 110 pMC, though there are some differences such as regional differences. On the other hand, the measured $^{14}C$ content of a chemical substance derived from a fossil fuel, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

(Filler)

The rubber composition desirably contains a filler.

The filler is not limited, and materials known in the rubber field are usable. Examples include inorganic fillers such as carbon black, silica, calcium carbonate, talc, alumina, clay, aluminum hydroxide, aluminum oxide, and mica; bio char, and hard-to-disperse fillers. To better achieve the advantageous effect, carbon black and silica are preferred among these.

Non-limiting examples of the carbon black include N134, N110, N220, N234, N219, N339, N330, N326, N351, N550, and N762. The raw material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and other manufacturers. Each of these carbon black may be used alone, or two or more of these may be used in combination.

The nitrogen adsorption specific surface area ($N_2SA$) of the carbon black is preferably 5 $m^2/g$ or more, more preferably 20 $m^2/g$ or more, still more preferably 40 $m^2/g$ or more. The $N_2SA$ is preferably 200 $m^2/g$ or less, more preferably 130 $m^2/g$ or less, still more preferably 120 $m^2/g$ or less. When the $N_2SA$ is within the range indicated above, the

advantageous effects tend to be better achieved.

Herein, the nitrogen adsorption specific surface area of carbon black may be determined in accordance with JIS K 6217-2:2001.

Non-limiting examples of silica usable in the rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product including an electronic component such as a semiconductor, a tire, a drying agent, or a filtering material such as diatomite. Non-limiting examples of the recovering method include thermal decomposition and decomposition by electromagnetic waves. Preferred among these is silica recovered from an electronic component such as a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar and other manufacturers.

The nitrogen adsorption specific surface area ($N_2SA$) of the silica is preferably 50 $m^2/g$ or more, more preferably 80 $m^2/g$ or more, still more preferably 100 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effects tend to be better achieved.

The $N_2SA$ of silica is measured by a BET method in accordance with ASTM D3037-93.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of the filler (total amount of fillers such as carbon black and silica) per 100 parts by mass of rubber component(s) in the rubber composition is preferably 5 parts by mass or more, more preferably 20 parts by mass or more, still more preferably 30 parts by mass or more, while it is preferably 150 parts by mass or less, more preferably 120 parts by mass or less, still more preferably 100 parts by mass or less. When the amount is within the range indicated above, the advantageous effects tend to be better achieved.

In view of cross-linking via hydrogen bonds, the amount is preferably 5 parts by mass or more, more preferably 10 parts by mass or more, while it is preferably 50 parts by mass or less, more preferably 30 parts by mass or less.

The amount of carbon black, if present, in the rubber composition per 100 parts by mass of rubber component(s) is preferably 1 part by mass or more, more preferably 3 parts by mass or more, still more preferably 5 parts by mass or more, while it is preferably 100 parts by mass or less, more preferably 50 parts by mass or less, still more preferably 30 parts by mass or less. When the amount is within the range indicated above, the advantageous effects tend to be better achieved.

In view of cross-linking via hydrogen bonds, the amount is preferably 1 part by mass or more, more preferably 2 parts by mass or more, while it is preferably 30 parts by mass or less, more preferably 5 parts by mass or less.

The amount of silica, if present, in the rubber composition per 100 parts by mass of rubber component(s) is preferably 5 parts by mass or more, more preferably 20 parts by mass or more, still more preferably 25 parts by mass or more, while it is preferably 100 parts by mass or less, more preferably 80 parts by mass or less, still more preferably 60 parts by mass or less. When the amount is within the range indicated above, the advantageous effects tend to be better achieved.

In view of cross-linking via hydrogen bonds, the amount is preferably 5 parts by mass or more, more preferably 10

parts by mass or more, while it is preferably 35 parts by mass or less, more preferably 25 parts by mass or less.

(Silane coupling agent)

The rubber composition which contains silica preferably further contains a silane coupling agent.
Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Evonik, Momentive, Shin-Etsu Silicone, Tokyo Chemical Industry Co., Ltd., AZmax. Co., Dow Corning Toray Co., Ltd., and other manufacturers. Each of these may be used alone, or two or more of these may be used in combination.
The amount of silane coupling agents per 100 parts by mass of silica in the rubber composition is preferably 0.1 parts by mass or more, more preferably 3 parts by mass or more, still more preferably 5 parts by mass or more, further preferably 7 parts by mass or more, particularly preferably 8 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effects tend to be better achieved.

(Plasticizer)

The rubber composition may contain a plasticizer.
Herein, the term "plasticizer" refers to a material that imparts plasticity to rubber components and conceptually includes both plasticizers that are liquid at 25°C and plasticizers that are solid at 25°C. Examples of the plasticizer include resin components, oils, liquid polymers, and ester plasticizers. These plasticizers may be derived from mineral resources such as petroleum or natural gas, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.
Examples of plasticizers usable in the rubber composition include oils, liquid polymers, and resins. Each of these may be used alone, or two or more of these may be used in combination.
Examples of the oils include mineral oils, plant oils, and animal oils. In view of life cycle assessment, oils obtained by purifying waste oils used in rubber mixing machines or engines or waste cooking oils used in cooking establishments may be used.
Herein, mineral oils refer to oils derived from mineral resources such as petroleum or natural gas. Examples of the mineral oils include paraffinic oils (mineral oils), naphthenic oils, and aromatic oils. Specific examples of the mineral oils include mild extract solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.
Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at 25°C. Each of these plant oils may be used alone, or two or more of these may be used in combination.
The plant oils according to the present embodiments each preferably contain acylglycerol and more preferably contain triacylglycerol. Herein, the term "acylglycerol" refers to a compound in which hydroxyl groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at 25°C.

Whether a rubber composition contains the acylglycerol may be examined by any method such as $^1$H-NMR analysis. For example, a rubber composition containing triacylglycerol is immersed in deuterium chloroform at 25°C for 24 hours. After removing the rubber composition, the $^1$H-NMR is measured at room temperature. Signals observed at around 5.26 ppm, around 4.28 ppm, and around 4.15 ppm, each relative to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or other techniques to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, and other manufacturers.

Examples of the liquid polymers include liquid diene-based polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene-based polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene-based polymers may be 4500 or 8500, and the upper limit may be 4500 or 8500. Herein, the Mw of the liquid diene-based polymers is measured by gel permeation chromatography (GPC) and calibrated with polystyrene standards.

Usable liquid diene-based polymers may be commercially available from Sartomer, Kraray, and other manufacturers.

The resins may be resins that are usually used as additives for tires. They may be either liquid or solid at 25°C. Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at 25°C, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effects tend to be better achieved.

The softening point of the resins that are liquid at 25°C is preferably 20°C or lower, preferably 10°C or lower, preferably 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton

(backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxyl groups and are produced by copolymerization of aromatic vinyl monomer components and acrylic monomer components. Solvent-free, carboxyl group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., and other manufacturers.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

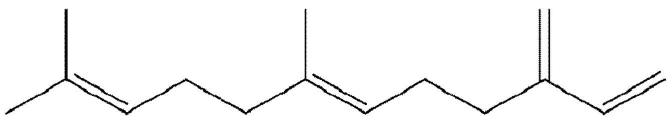

.

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effects tend to be better achieved.

Farnesene polymers that are either liquid or solid at 25°C may be used. Of these, liquid farnesene polymers that are liquid at 25°C are desirable.

The amount of the plasticizer (total amount of plasticizers), if present, in the rubber composition per 100 parts by mass of rubber component(s) is preferably 1 part by mass or more, more preferably 3 parts by mass or more, still more preferably 5 parts by mass or more, while it is preferably 50 parts by mass or less, more preferably 20 parts by mass or less, still more preferably 10 parts by mass or less. When the amount is within the range indicated above, the advantageous effects tend to be better achieved.

The amount of the plasticizer includes the amounts of oils and resins contained in oil-extended rubbers and resin-extended rubbers, respectively.

The amount of solid plasticizers that are solid at 25°C in the rubber composition per 100 parts by mass of rubber component(s) is preferably 1 part by mass or more, more preferably 3 parts by mass or more, still more preferably 5 parts by mass or more, while it is preferably 50 parts by mass or less, more preferably 20 parts by mass or less, still more preferably 10 parts by mass or less. When the amount is within the range indicated above, the advantageous effects tend to be better achieved.

The amount of the solid plasticizer includes the amounts of resins contained in resin-extended rubbers.

The amount of liquid plasticizers that are liquid at 25°C in the rubber composition per 100 parts by mass of rubber component(s) is preferably 1 part by mass or more, more preferably 3 parts by mass or more, still more preferably 5 parts by mass or more, while it is preferably 50 parts by mass or less, more preferably 20 parts by mass or less, still more preferably 10 parts by mass or less. When the amount is within the range indicated above, the advantageous effects tend to be better achieved.

The amount of the liquid plasticizers includes the amount of oils in oil-extended rubbers and the amount of liquid resins in resin-extended rubbers extended with liquid resins.

(Other components)

The rubber composition may further contain vulcanized rubber particles.

The term "vulcanized rubber particles" refers to particles made of vulcanized rubber. Examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, and other manufacturers.

The amount of vulcanized rubber particles per 100 parts by mass of the rubber component in the rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effects tend to be better achieved.

In view of crack resistance, ozone resistance, or the like, the rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl) propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of rubber component(s) in the rubber composition is preferably 0.5 parts by mass or more, more preferably 1.0 parts by mass or more. The amount is preferably 7.0 parts by mass or less, more preferably 5.0 parts by mass or less.

The rubber composition preferably contains stearic acid.

The amount of the stearic acid per 100 parts by mass of rubber component(s) in the rubber composition is preferably 1.0 parts by mass or more, more preferably 2.0 parts by mass or more, still more preferably 2.5 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., and other manufacturers.

The rubber composition preferably contains zinc oxide.

The amount of the zinc oxide per 100 parts by mass of rubber component(s) in the rubber composition is preferably 1.0 parts by mass or more, more preferably 2.0 parts by mass or more, still more preferably 2.5 parts by mass or more, while it is preferably 5.0 parts by mass or less, more preferably 3.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., and other manufacturers. Each of these may be used alone, or two or more of these may be used in combination.

The rubber composition may contain short fibers.

The amount of the short fibers per 100 parts by mass of rubber component(s) is preferably 1 part by mass or more, more preferably 5 parts by mass or more. The amount is preferably 50 parts by mass or less, more preferably 30 parts by mass or less.

Examples of the short fibers include non-metal inorganic short fibers such as glass fibers and carbon fibers, and non-metal organic short fibers such as cellulose fibers, rayon fibers, acrylic fibers, polyester fibers, nylon fibers, aromatic polyamide fibers, urethane fibers, and aramid fibers.

The rubber composition may contain a processing aid.

The amount of the processing aid per 100 parts by mass of rubber component(s) in the rubber composition is preferably 0.5 parts by mass or more, more preferably 2 parts by mass or more, while it is preferably 10 parts by mass or less, more preferably 6 parts by mass or less.

The rubber composition desirably contains sulfur.

The amount of the sulfur per 100 parts by mass of rubber component(s) in the rubber composition is preferably 0.3 parts by mass or more, more preferably 0.5 parts by mass or more, still more preferably 0.7 parts by mass or more, while it is preferably 3.5 parts by mass or less, more preferably 3.0 parts by mass or less, still more preferably 2.5 parts by mass or less. When the amount is within the range indicated above, the advantageous effects tend to be better achieved.

In view of strain recovery ratio, the amount is preferably 0.1 parts by mass or more, more preferably 0.3 parts by mass or more, while it is preferably 1.0 parts by mass or less, more preferably 0.7 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, and other manufacturers. Each of these may be used alone, or two or more of these may be used in combination.

The rubber composition preferably contains a vulcanization accelerator.

The amount of the vulcanization accelerator in the rubber composition is not limited and may be freely determined according to the desired curing rate and crosslink density. Still, the amount per 100 parts by mass of the rubber component is preferably 0.5 parts by mass or more, more preferably 1.3 parts by mass or more, still more preferably 1.5 parts by mass or more. The upper limit is preferably 8.0 parts by mass or less, more preferably 6.0 parts by mass or less, still more preferably 4.0 parts by mass or less.

Any type of vulcanization accelerators may be used, including those generally used. Examples of the vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., and other manufacturers. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants, or other materials) may be derived from carbon dioxide in the air. Such materials in the present invention may be obtained from carbon dioxide by directly converting carbon dioxide or by synthesizing methane from carbon dioxide through methanation and then converting the methane.

An exemplary method to produce the rubber composition includes kneading the components using a rubber kneading machine such as an open roll mill or a Banbury mixer and then vulcanizing the mixture.

The kneading conditions are as follows. In a base kneading step of kneading additives other than crosslinking agents (vulcanizing agents) and vulcanization accelerators, the kneading temperature is preferably 100°C or higher, more preferably 120°C or higher, while it is preferably 180°C or lower, more preferably 170°C or lower. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.
The rubber composition can suitably be used in a tire component.
The tire component is not limited, and examples include treads such as cap treads and base treads, sidewalls, bead apexes, clinch apexes, innerliners, undertreads, breaker toppings, ply toppings, and any other tire components. In view of good overall performance in terms of rubber tensile strength and compression set, tire surface components prone to exterior damage, such as sidewalls, treads, wings, or clinches, are preferred, with sidewalls being more preferred.

<Tire>

The rubber composition can suitably be used in a tire.
Non-limiting examples of the tire include pneumatic tires, solid tires, and airless tires. Pneumatic tires are preferred among these.
The tire can suitably be used as, for example, a summer tire, a winter tire (e.g., studless tire, snow tire, studded tire), or an all-season tire.
The tire can also be used as a passenger car tire, a large passenger car tire, a large SUV tire, a heavy duty vehicle tire such as a truck or bus tire, a light truck tire, a motorcycle tire, a racing tire (high performance tire), an aircraft tire, a mining vehicle tire, or other tires. Of these, the tire can suitably be used as a passenger car tire or a light truck tire.
The tire can be produced using the rubber composition by a usual method. For example, a rubber composition containing various materials before vulcanization is extruded and processed into the shape of a tire component and then molded with other tire components on a tire building machine by a usual method to form an unvulcanized tire, followed by heating and pressurizing in a vulcanizer, whereby the tire can be produced.

EXAMPLES

Examples (working examples) which are considered preferable to implement the present invention are described below although the scope of the invention is not limited to the examples.
Modified hydrogenated styrene-butadiene copolymers are produced and evaluated by the methods described below. Table 1 shows physical properties and other properties.

<Polymer evaluation method>

(Bound styrene content (styrene content))

The polymers are used as specimens. To 100 mg of each specimen is added chloroform to a volume of 100 mL, and the specimen is dissolved, thereby preparing a measurement sample.
The bound styrene content (% by mass) in 100% by mass of the polymer as a specimen is determined based on the absorbance at an ultraviolet absorption wavelength around 254 nm due to the phenyl group of styrene (measurement device: spectrophotometer "UV-2450" available from Shimadzu Corporation).

(Degree of hydrogenation of polymer)

The degree of hydrogenation of the polymer as a specimen is measured by $^{1}$H-NMR analysis. The conditions for the $^{1}$H-NMR analysis are described below.

<Measurement conditions>

Measurement device: JNM-LA400 (available from JEOL) Solvent: deuterated chloroform
Measurement sample: rubber-like polymer
Sample concentration: 50 mg/mL

Observation frequency: 400 MHz
Chemical shift standard: tetramethylsilane (TMS) Pulse delay: 2.904 sec
Number of scan: 64
Pulse width: 45°
Measurement temperature: 26°C

(Amount added of nitrile oxide compound having nitrile oxide group and cationic functional group)

The amount of the nitrile oxide compound having a nitrile oxide group and a cationic functional group (CNO-Py) added by reaction to the polymer is measured as described below.
The percentage (mol%) of the nitrile oxide compound added to the carbon-carbon double bonds in the polymer is determined by IR measurement, $^1$H-NMR analysis, and $^{13}$C-NMR analysis.

(Amount added of nitrile oxide compound having nitrile oxide group and anionic functional group)

The amount of the nitrile oxide compound having a nitrile oxide group and an anionic functional group (CNO-COOH) added by reaction to the polymer is measured as described below.
The percentage (mol%) of the nitrile oxide compound added to the carbon-carbon double bonds in the polymer is determined by IR measurement, $^1$H-NMR analysis, and $^{13}$C-NMR analysis.

(Glass transition temperature (Tg))

The glass transition temperature is measured in accordance with JIS-K 7121:1987 at a temperature increase rate of 10°C /min using a differential scanning calorimeter (Q200) available from TA Instruments, Japan.

<Production of hydrogenated styrene-butadiene copolymer (hydrogenated SBR)>

A sufficiently nitrogen-purged heat-resistant reaction vessel is charged with n-hexane, styrene, 1,3-butadiene, N,N,N',N'-tetramethylethylenediamine (TMEDA), and n-butyllithium, followed by stirring at 50°C for five hours to perform a polymerization reaction. Subsequently, the reaction solution is stirred for 20 minutes while supplying hydrogen gas at a pressure of 0.4 MPa gauge to react unreacted polymer terminal lithium with hydrogen into lithium hydride. Hydrogenation is performed using a titanocene dichloride-based catalyst at a hydrogen gas supply pressure of 0.7 MPa gauge and a reaction temperature of 90°C. Once the cumulative amount of absorbed hydrogen reaches the amount corresponding to the target degree of hydrogenation, the reaction temperature is brought to room temperature, and the hydrogen pressure is returned to an ordinary pressure. Then, the reaction solution is drawn from the reaction vessel and introduced into water with stirring. Next, the solvent is removed by steam stripping. Accordingly, a hydrogenated copolymer (a hydrogenated styrene-butadiene copolymer) (1), (2), or (3) shown in Table 1 is obtained.

<Synthesis of nitrile oxide compound having nitrile oxide group and cationic functional group (CNO-Py)>

Compound P3 (a nitrile oxide compound having a nitrile oxide group and a cationic functional group) is synthesized through the synthetic route in FIG. 1.

(Compound S → Compound P1)

A stirrer is placed in a three-necked flask. Then, 2-hydroxy-1-naphthaldehyde (compound S) and N,N-dimethylformamide (DMF) are put in the flask and stirred for dissolution. Subsequently, $K_2CO_3$ is added to the flask and stirred for one hour. To the resulting mixture is added 2-(chloromethyl)pyridine hydrochloride and stirred for dissolution. The solution is heated using an oil bath and reacted at 100°C. After three hours, the solution is cooled to room temperature and diluted with ethyl acetate. The dilution is put into a separatory funnel and subjected to liquid-liquid separation with water and an aqueous NaCl solution. The organic layer is collected and dried over $MgSO_4$, followed by removal of the solvents with an evaporator. The obtained crude product is recrystallized with ethanol, whereby compound P1 is obtained.

(Compound P1 → Compound P2)

A stirrer is placed in a beaker. Then, the compound P1 and ethanol are put in the beaker and stirred for dissolution. Subsequently, an aqueous $CH_3COONa \cdot 3H_2O$ solution and an aqueous $NH_2OH \cdot HCl$ solution are added to the beaker containing the compound P1 and reacted for four hours at room temperature. Next, a large amount of water is added to the

reaction liquid to precipitate compound P2. The precipitate is collected and dried, whereby the compound P2 is obtained.

(Compound P2 → Compound P3)

The compound P2 is dispersed in 2-propanol, and an aqueous NaClO solution is added to the compound P2 solution with a dropping funnel at 0°C to 5°C to react them. After completion of the dropping, the reaction is continued for one hour. Next, a large amount of water is added to the solution to precipitate compound P3. The precipitate is collected and dried, whereby the compound P3 (a nitrile oxide compound having a nitrile oxide group and a cationic functional group, CNO-Py) is obtained.

The $^1$H-NMR spectra (FIG. 2) and TGA (FIG. 3) of the synthesized product demonstrate the synthesis of the compound P3 (a nitrile oxide compound having a nitrile oxide group and a cationic functional group).

<Synthesis of nitrile oxide compound having nitrile oxide group and anionic functional group (CNO-COOH)>

Compound E (a nitrile oxide compound having a nitrile oxide group and an anionic functional group) is synthesized through the synthetic route in FIG. 4.

(Compound A → Compound B)

First, a stirrer, 2-hydroxy-1-naphthaldehyde (compound A), $K_2CO_3$, N,N-dimethylformamide (DMF), and ethyl 6-bromohexanoate are placed in a three-necked flask and stirred for dissolution. Next, the solution is heated using an oil bath and reacted at 100°C for three hours. After cooling the solution to room temperature, the solution is subjected to liquid-liquid separation with ethyl acetate and water. The ethyl acetate layer is dried over $MgSO_4$, followed by evaporation. The residue is recrystallized with hexane, whereby compound B is obtained.

(compound B → compound C)

The compound B and NaOH are dissolved in a mixed solvent of THF, iPrOH, and $H_2O$ (4:2:1) and they are reacted overnight at room temperature. After completion of the reaction, the reaction solution is neutralized with hydrochloric acid, followed by evaporation. The residue is diluted with water. The dilution and ethyl acetate are put into a separatory funnel to be subjected to liquid-liquid separation. The ethyl acetate layer is dried over $MgSO_4$, dried by evaporation, and then dried in vacuum, whereby compound C is obtained.

(Compound C → Compound D)

A stirrer, the compound C, and ethanol are placed in a 500-ml beaker and stirred for dissolution. Subsequently, an aqueous $CH_3COONa \cdot 3H_2O$ solution and an aqueous $NH_2OH \cdot HCl$ solution are added to the compound C solution and reacted at room temperature for four hours to give a precipitate. The mixture is filtered to collect the precipitate. The precipitate is collected and dried in vacuum, whereby compound D is obtained.

(Compound D → Compound E)

A stirrer, the compound D, and 2-propanol are placed in a three-necked flask and stirred for dispersion in an ice bath. An aqueous NaClO solution is added to the flask with a dropping funnel at 0°C to 5°C and reacted. After completion of the reaction, HCl is added to adjust the pH to about 5, followed by separation with $CHCl_3$. The $CHCl_3$ layer is dried over $MgSO_4$ and then dried by evaporation. Next, the dried product is recrystallized with ethanol/water, whereby target compound E (a nitrile oxide compound having a nitrile oxide group and an anionic functional group) is obtained.

The $^1$H-NMR spectra (FIG. 5) and IR spectra (FIG. 6) of the synthesized product demonstrate the synthesis of compound E (a nitrile oxide compound having a nitrile oxide group and an anionic functional group).

<Synthesis of modified polymer (modified hydrogenated styrene-butadiene copolymer)>

The hydrogenated copolymers (1) to (3) obtained above (hydrogenated styrene-butadiene copolymers) are used to obtain modified polymers (modified hydrogenated copolymers (4) to (6)), respectively.

Specifically, according to Table 1, the compound E (CNO-COOH) is added to the hydrogenated copolymer (1), (2), or (3) and kneaded at 70°C for 15 minutes to proceed a reaction during the kneading. Next, the compound P3 (CNO-Py) is added to the kneaded mixture and kneaded at 70°C for 15 minutes to proceed a reaction during the kneading, whereby a modified polymer (modified hydrogenated copolymer (4), (5), or (6)) that has been modified by both the

compounds CNO-COOH and CNO-Py.

[Table 1]

| | Hydrogenated copolymer (1) | Hydrogenated copolymer (2) | Hydrogenated copolymer (3) | Modified hydrogenated copolymer (4) | Modified hydrogenated copolymer (5) | Modified hydrogenated copolymer (6) | Copolymer (7) |
|---|---|---|---|---|---|---|---|
| Degree of hydrogenation (mol%) | 95 | 88 | 60 | 95 (Copolymer (1)) | 88 (Copolymer (2)) | 60 (Copolymer (3)) | 0 (= SBR) |
| Styrene content (mol%) | 20 | 20 | 20 | 20 | 20 | 20 | 25 |
| Butadiene content (mol%) | 80 | 80 | 80 | 80 | 80 | 80 | 75 |
| CNO-Py (mol%) | | | | 2.5 | 6 | 20 | |
| CNO-COOH (mol%) | | | | 2.5 | 6 | 20 | |
| Glass transition temperature (Tg) (°C) | -50 | -50 | -50 | -35 | -20 | -10 | -55 |

The copolymer (7) in Table 1 is the following material.

Copolymer (7): ESBR1502 (ENEOS Materials Corporation, E-SBR, styrene content: 24% by mass, vinyl content: 17% by mass, non-oil-extended product free from oils per 100 parts by mass of solid rubber content)

<Production of rubber composition>

The following chemicals are used in the description below.

Hydrogenated copolymers (1) to (3): hydrogenated styrene-butadiene copolymers (hydrogenated SBR) described above
Modified hydrogenated copolymers (4) to (6): modified polymers (modified hydrogenated styrene-butadiene copolymers) described above
Copolymer (7): ESBR1502 described above
Carbon black: SHOBLACK N220 ($N_2SA$: 111 $m^2/g$) available from Cabot Japan K.K.
Silica: ULTRASIL VN3 ($N_2SA$: 175 $m^2/g$) available from Evonik
Silane coupling agent: Si266 (bis(3-triethoxysilylpropyl)disulfide) available from Evonik
Resin: Oppera PR-395 (hydrogenated DCPD resin) available from Exxon Mobil
Oil: VIVATEC500 (aromatic process oil) available from H&R
Zinc oxide: zinc oxide #2 available from Mitsui Mining & Smelting Co., Ltd.
Antioxidant: NOCRAC 6C available from Ouchi Shinko Chemical Industrial Co., Ltd.
Stearic acid: a product of NOF Corporation
Wax: Ozoace 0355 available from Nippon Seiro Co., Ltd.
Sulfur: powdered sulfur available from Tsurumi Chemical Industry Co., Ltd.
Vulcanization accelerator 1: NOCCELER D available from Ouchi Shinko Chemical Industrial Co., Ltd.
Vulcanization accelerator 2: NOCCELER CZ-G available from Ouchi Shinko Chemical Industrial Co., Ltd.

(Production of rubber composition)

According to the formulation in Table 2, the chemicals other than the sulfur and the vulcanization accelerators are kneaded in a 1.7-L Banbury mixer (Kobe Steel, Ltd.) at 130°C for five minutes to obtain a kneaded mixture.

To the kneaded mixture are added the sulfur and the vulcanization accelerators and kneaded at 70°C for four minutes to obtain an unvulcanized rubber composition.

The unvulcanized rubber composition is press-vulcanized at 170°C for 12 minutes to obtain a vulcanized rubber composition.

The vulcanized rubber composition is subjected to the measurement of physical properties and evaluations described below. Table 2 shows the results. The reference comparative example is as follows.

Table 1: Comparative Example 1

<Rubber tensile strength>

A No. 7 dumbbell-shaped test piece is prepared and subjected to a tensile test using a tensile tester (RTG-1210, A&D Company, Ltd.) at a test temperature of 23°C and a tensile test speed of 200 mm/min to measure the following TB and EB.

TB: strength at break TB (MPa) of a cross-sectional area of the narrowest part (narrow part in the middle of the dumbbell) of the test piece
EB: elongation at break EB (%) determined by subjecting the test piece to a tensile test in which the test piece is placed on the tester with a chuck distance of 20 mm, analyzing the chuck distance at break, and calculating the EB (%) using the following expression:

(Chuck distance (mm) at break/Initial chuck distance (20 mm) ) × 100

Further, a tensile energy is calculated from the obtained TB and EB using the following expression and is then expressed as an index relative to the tensile energy in the reference comparative example taken as 100.

$$\text{Tensile energy} = TB \times EB/2$$

A higher tensile energy indicates better rubber tensile strength (durability).

<Strain recovery ratio>

The compression set (%) of the rubber composition is measured in accordance with JIS K 6262:2013. A value of "100 - compression set (%)" is calculated and determined as a strain recovery ratio (%). The calculated value is expressed as an index relative to the calculated value in the reference comparative example taken as 100. A higher index indicates a higher strain recovery ratio, in other words, a smaller compression set.

<Overall performance>

The overall performance in terms of rubber tensile strength and compression set is evaluated based on the sum of two indices determined by rubber tensile strength evaluation and the strain recovery ratio evaluation. A larger sum indicates better overall performance.

[Table 2]

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Formulation (parts by mass) | Hydrogenated copolymer (1) (Hydrogenated SBR, Degree of hydrogenation 95 mol%) | 80 | 50 | | | | | 50 | | | |
| | Hydrogenated copolymer (2) (Hydrogenated SBR, Degree of hydrogenation 88 mol%) | | | 80 | 50 | | | | | 100 | |
| | Hydrogenated copolymer (3) (Hydrogenated SBR, Degree of hydrogenation 60 mol%) | | | | | 80 | 50 | | 100 | | |
| | Modified hydrogenated copolymer (4) (Hydrogenated copolymer (1) + CNO-Py + CNO-COOH) | 20 | 50 | | | | | | | | |
| | Modified hydrogenated copolymer (5) (Hydrogenated copolymer (2) + CNO-Py + CNO-COOH) | | | 20 | 50 | | | | | | |
| | Modified hydrogenated copolymer (6) (Hydrogenated copolymer (3) + CNO-Py + CNO-COOH) | | | | | 20 | 50 | 50 | | | |
| | Copolymer (7) (SBR) | | | | | | | | | | 100 |
| | Carbon black | 5 | 5 | 5 | 5 | 5 | 5 | 5 | 5 | 5 | 5 |
| | Silica | 25 | 25 | 25 | 25 | 25 | 25 | 25 | 25 | 25 | 25 |
| | Silane coupling agent | 2 | 2 | 2 | 2 | 2 | 2 | 2 | 2 | 2 | 2 |
| | Resin | 30 | 30 | 30 | 30 | 30 | 30 | 30 | 30 | 30 | 30 |
| | Oil | 20 | 20 | 20 | 20 | 20 | 20 | 20 | 20 | 20 | 20 |
| | Zinc oxide | 2.5 | 2.5 | 2.5 | 2.5 | 2.5 | 2.5 | 2.5 | 2.5 | 2.5 | 2.5 |
| | Antioxidant | 2.5 | 2.5 | 2.5 | 2.5 | 2.5 | 2.5 | 2.5 | 2.5 | 2.5 | 2.5 |
| | Stearic acid | 2.0 | 2.0 | 2.0 | 2.0 | 2.0 | 2.0 | 2.0 | 2.0 | 2.0 | 2.0 |
| | Wax | 2.0 | 2.0 | 2.0 | 2.0 | 2.0 | 2.0 | 2.0 | 2.0 | 2.0 | 2.0 |
| | Sulfur | 0.7 | 0.7 | 0.7 | 0.7 | 0.7 | 0.7 | 0.7 | 0.7 | 0.7 | 0.7 |
| | Vulcanization accelerator 1 | 2.0 | 2.0 | 2.0 | 2.0 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 | 2.0 | 2.0 | 2.0 | 2.0 |
| Others | CNO content (mol%) | 1.0 | 2.5 | 2.4 | 6.0 | 8.0 | 20.0 | 20.0 | - | - | - |
| | Double bond content (mol%) | 4.0 | 2.5 | 9.6 | 6.0 | 32.0 | 20.0 | 2.5 | 40.0 | 12.0 | 76.0 |
| Evaluation | (a) Rubber tensile strength index | 300 | 280 | 120 | 160 | 140 | 125 | 125 | 100 | 90 | 90 |
| | (b) Strain recovery ratio (index) | 102 | 100 | 105 | 105 | 107 | 107 | 107 | 100 | 102 | 108 |
| | Overall performance (= (a) + (b)) | 402 | 380 | 225 | 265 | 247 | 232 | 232 | 200 | 192 | 198 |

Here, the "CNO content" in Table 2 is the amount of monomer units added by the CNO compound based on 100% by mass of rubber component(s). For example, the CNO content in Example 1 is 1.0 mol% = modified hydrogenated copolymer (4) (modified hydrogenated SBR) 20 parts by mass × 5/100 (butadiene unit content).

The "double bond content" in Table 2 is the amount of double bond-containing monomer units based on 100 parts by mass of rubber component(s). For example, the double bond content in Example 1 is 4.0 mol% = hydrogenated copolymer (1) (hydrogenated SBR) 80 parts by mass × 5/100 (butadiene unit content). In the calculation, a CNO compound adduct of a modified hydrogenated copolymer is assumed to be 100 mol% added, with no residual double

bonds remaining.

## Claims

1. A modified polymer obtained by reacting a nitrile oxide compound having a nitrile oxide group and an ionic functional group with a multi-component copolymer A containing a conjugated diene unit and a non-conjugated olefin unit.

2. The modified polymer according to claim 1, wherein the multi-component copolymer A is a polymer containing a conjugated diene unit, a non-conjugated olefin unit, and an aromatic vinyl unit.

3. The modified polymer according to claim 1 or 2, wherein the multi-component copolymer A is a hydrogenated copolymer.

4. The modified polymer according to claim 3, wherein the hydrogenated copolymer has a degree of hydrogenation of 80 mol% or higher.

5. The modified polymer according to any one of claims 2 to 4, wherein the aromatic vinyl unit content based on 100 mol% of the total structural units of the multi-component copolymer A is 5 mol% to 50 mol%.

6. The modified polymer according to any one of claims 1 to 5, wherein the multi-component copolymer A is a hydrogenated styrene-butadiene copolymer.

7. The modified polymer according to any one of claims 1 to 6, wherein the nitrile oxide compound includes a nitrile oxide compound having a nitrile oxide group and a cationic functional group and a nitrile oxide compound having a nitrile oxide group and an anionic functional group.

8. The modified polymer according to any one of claims 1 to 7, wherein the modified polymer has a glass transition temperature of higher than -50°C, 5°C or lower.

9. A rubber composition comprising the modified polymer according to any one of claims 1 to 8.

10. The rubber composition according to claim 9, wherein the amount of the modified polymer based on 100% by mass of rubber component(s) is 5% by mass to 90% by mass.

11. The rubber composition according to claim 9 or 10, further comprising a multi-component copolymer B containing a conjugated diene unit and a non-conjugated olefin unit.

12. The rubber composition according to claim 11 wherein the amount of the multi-component copolymer B based on 100% by mass of rubber component(s) is 20% by mass to 95% by mass.

13. The rubber composition according to any one of claims 9 to 12, further comprising silica, wherein the amount of silica per 100 parts by mass of rubber component(s) is 5 parts by mass to 100 parts by mass.

14. The rubber composition according to any one of claims 9 to 13, including hydrogen bonds and sulfur cross-links formed therein.

15. A tire comprising the rubber composition according to any one of claims 9 to 14.

FIG.1

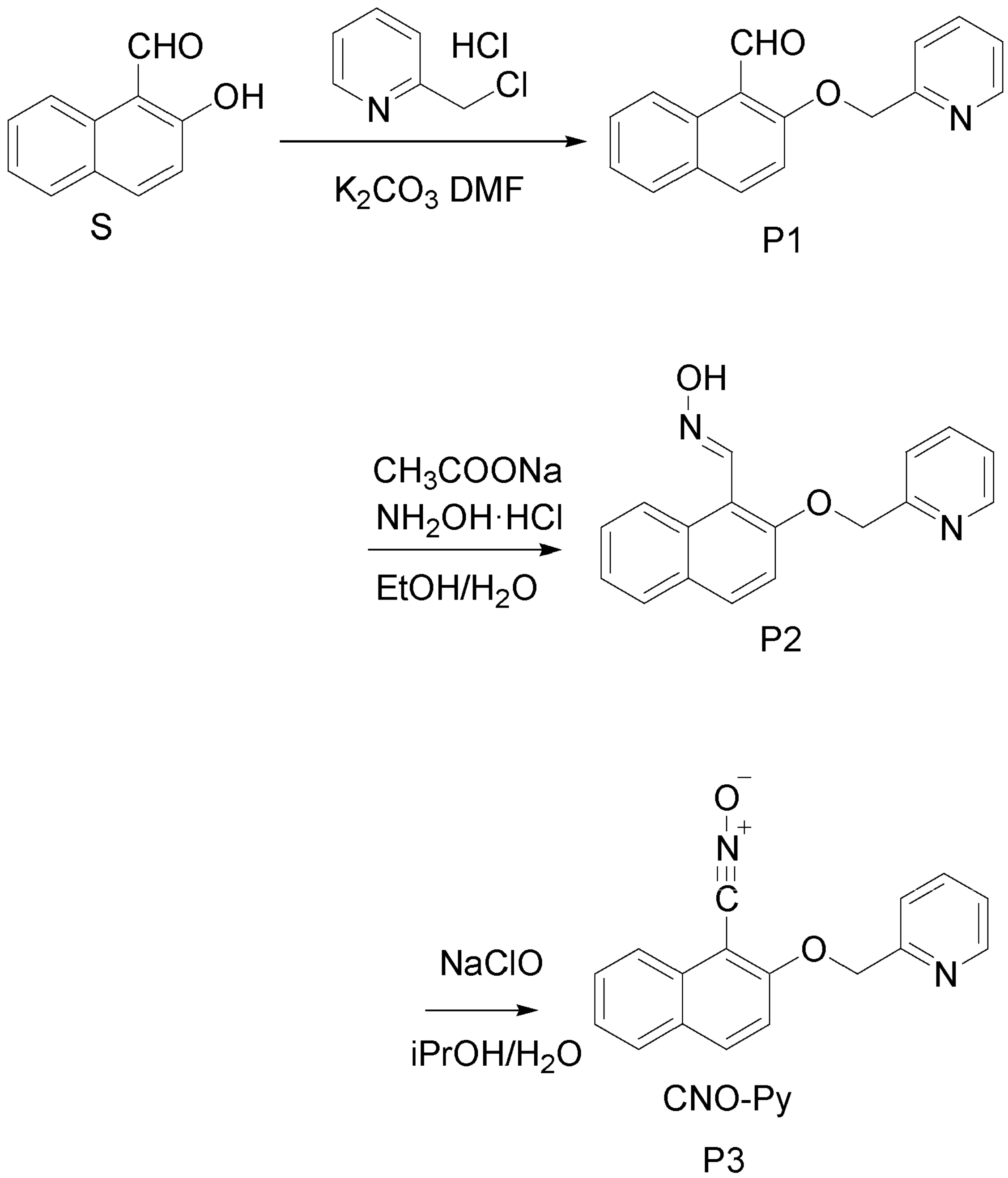
HCl
K2CO3 DMF
S
P1
CH3COONa
NH2OH·HCl
EtOH/H2O
P2
NaClO
iPrOH/H2O
CNO-Py
P3

FIG.2

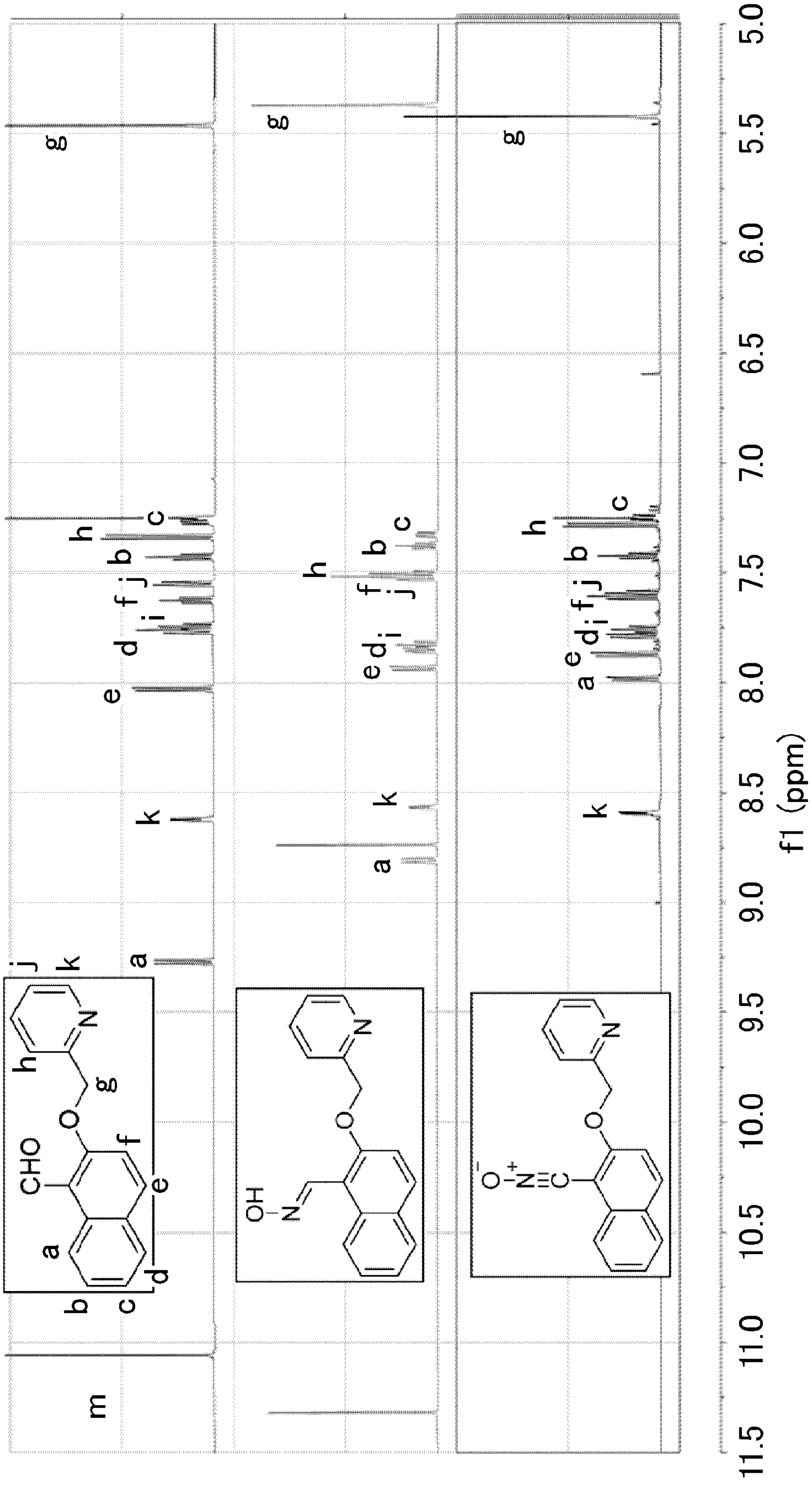

FIG.3

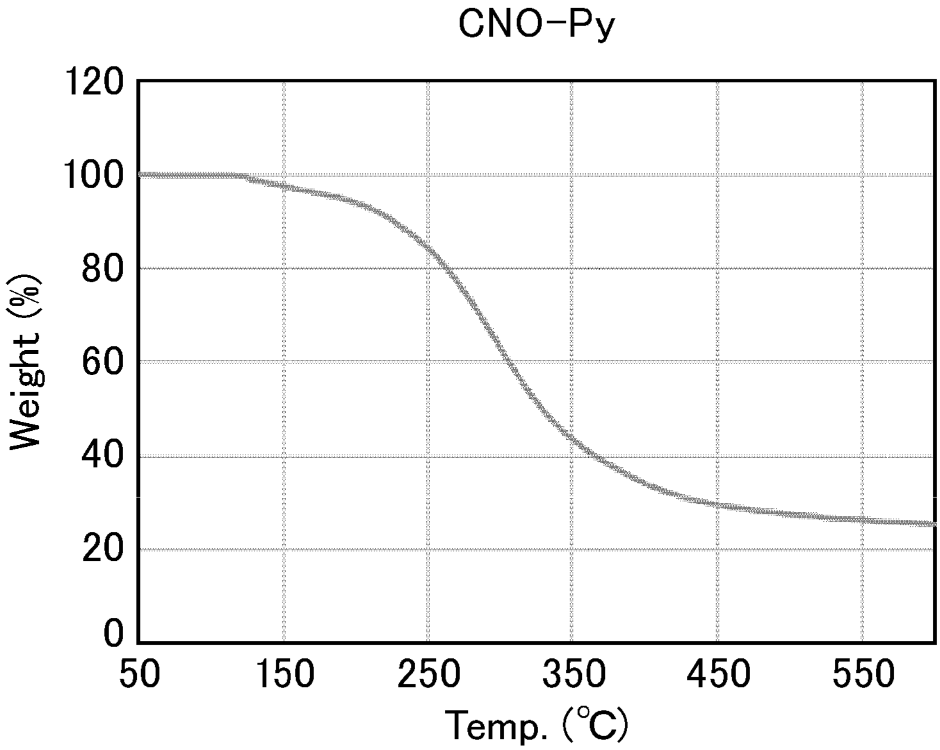
CNO-Py
Weight (%)
120
100
80
60
40
20
0
50
150
250
350
450
550
Temp. (°C)

FIG.4

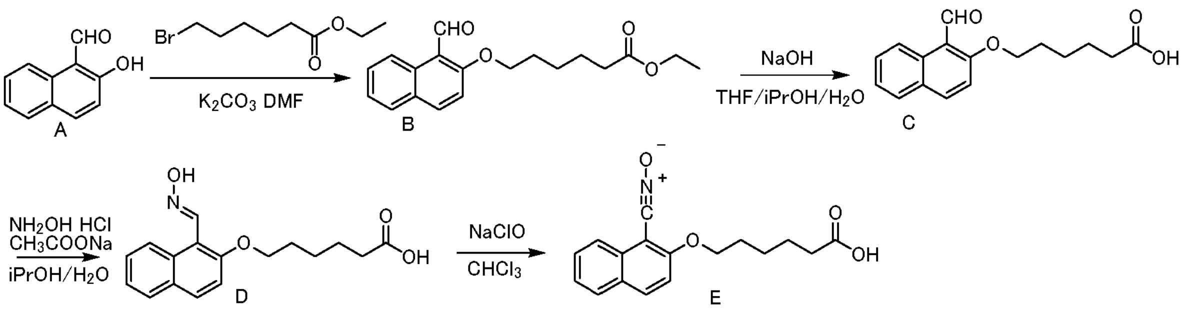
A
K2CO3 DMF
B
NaOH
THF/iPrOH/H2O
C
NH2OH HCl
CH3COONa
iPrOH/H2O
D
NaClO
CHCl3
E

FIG.5

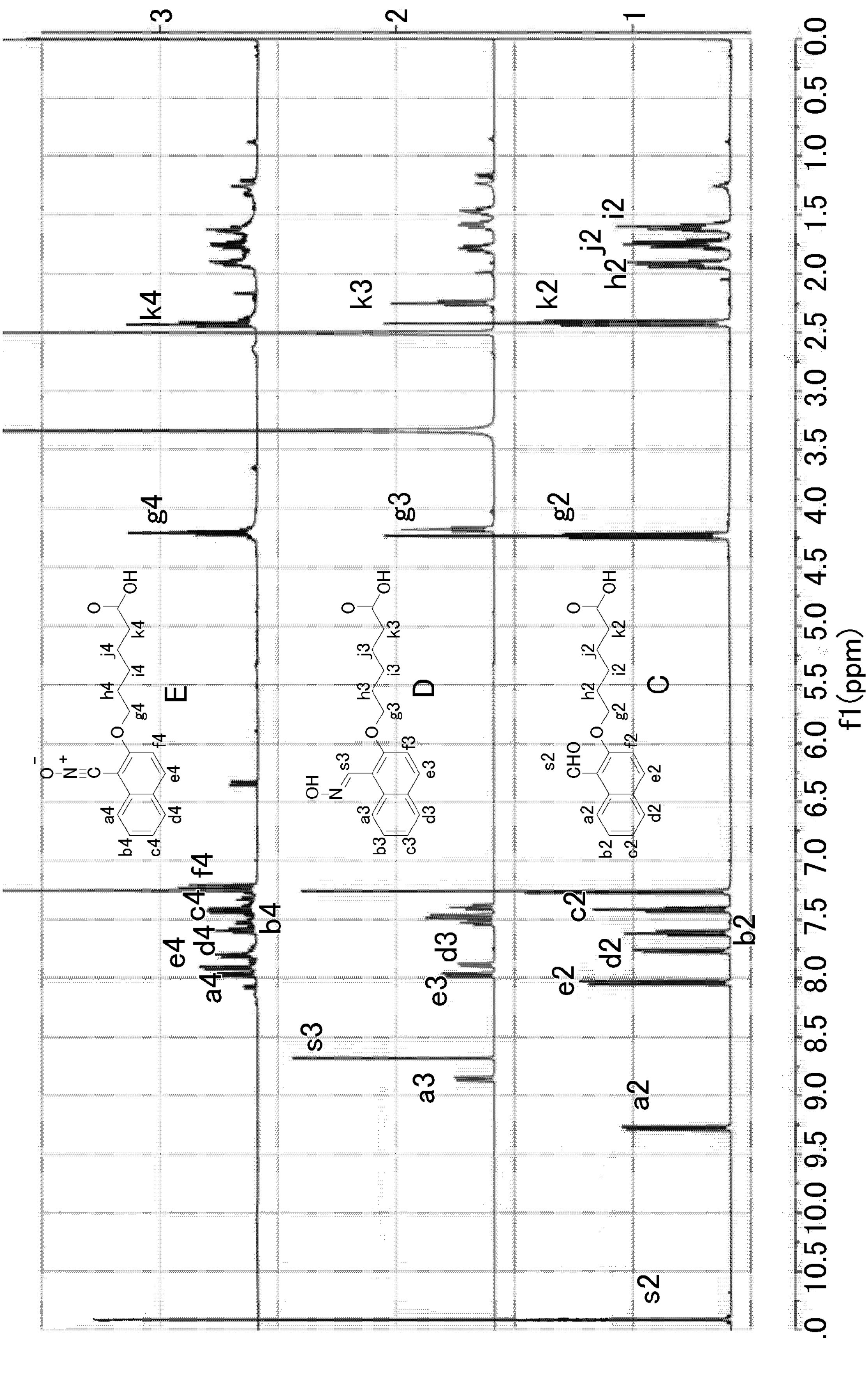

FIG.6

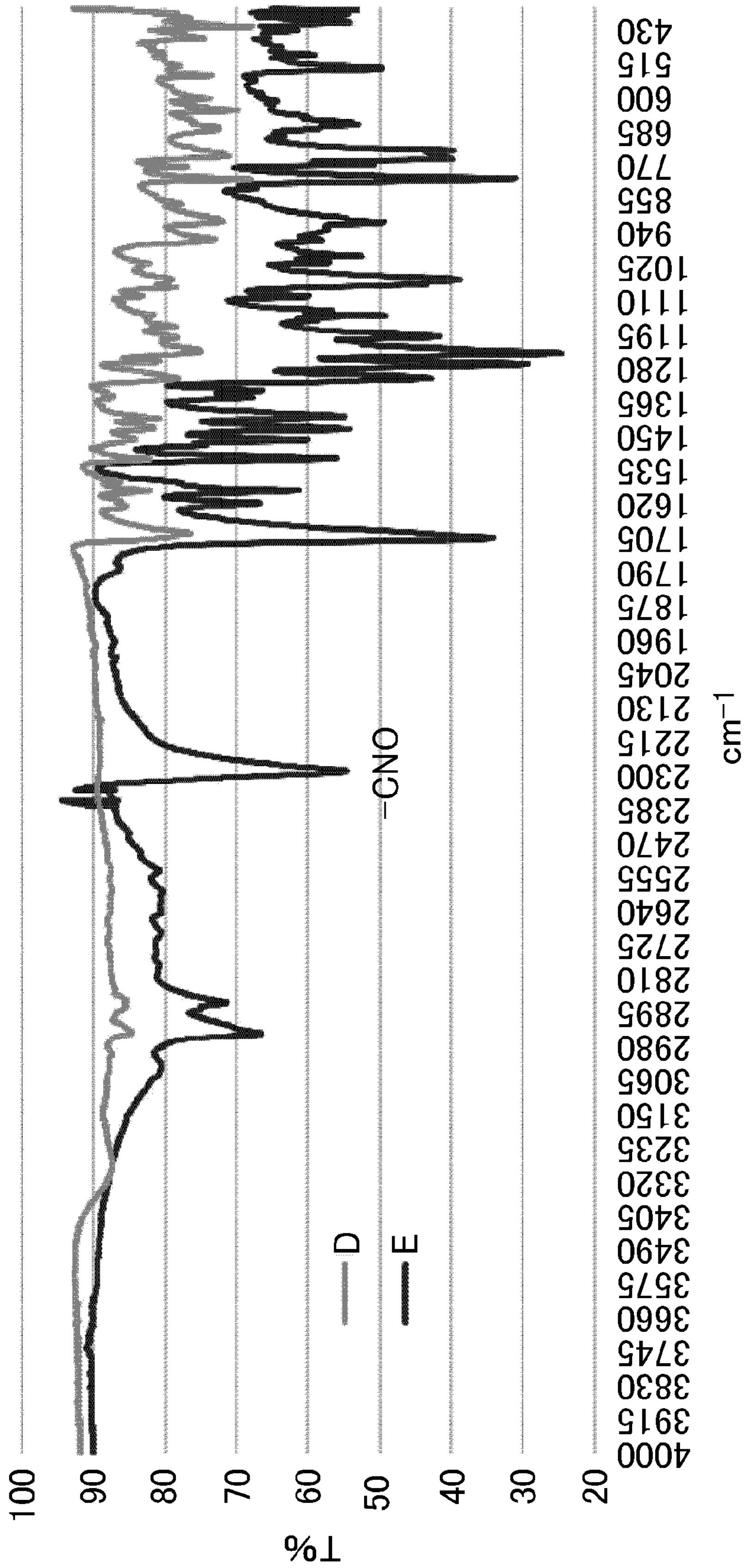
T%
cm⁻¹
-CNO
D
E
100
90
80
70
60
50
40
30
20
4000
3915
3830
3745
3660
3575
3490
3405
3320
3235
3150
3065
2980
2895
2810
2725
2640
2555
2470
2385
2300
2215
2130
2045
1960
1875
1790
1705
1620
1535
1450
1365
1280
1195
1110
1025
940
855
770
685
600
515
430

FIG.7

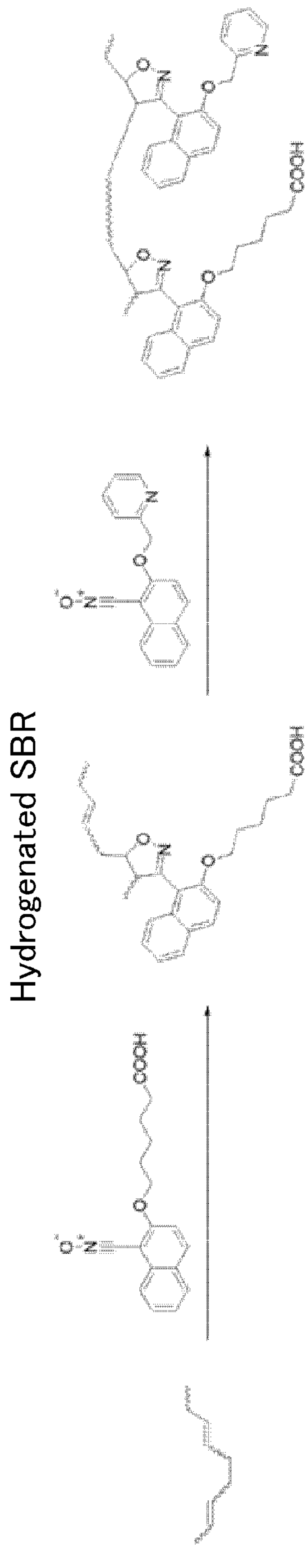

FIG.8

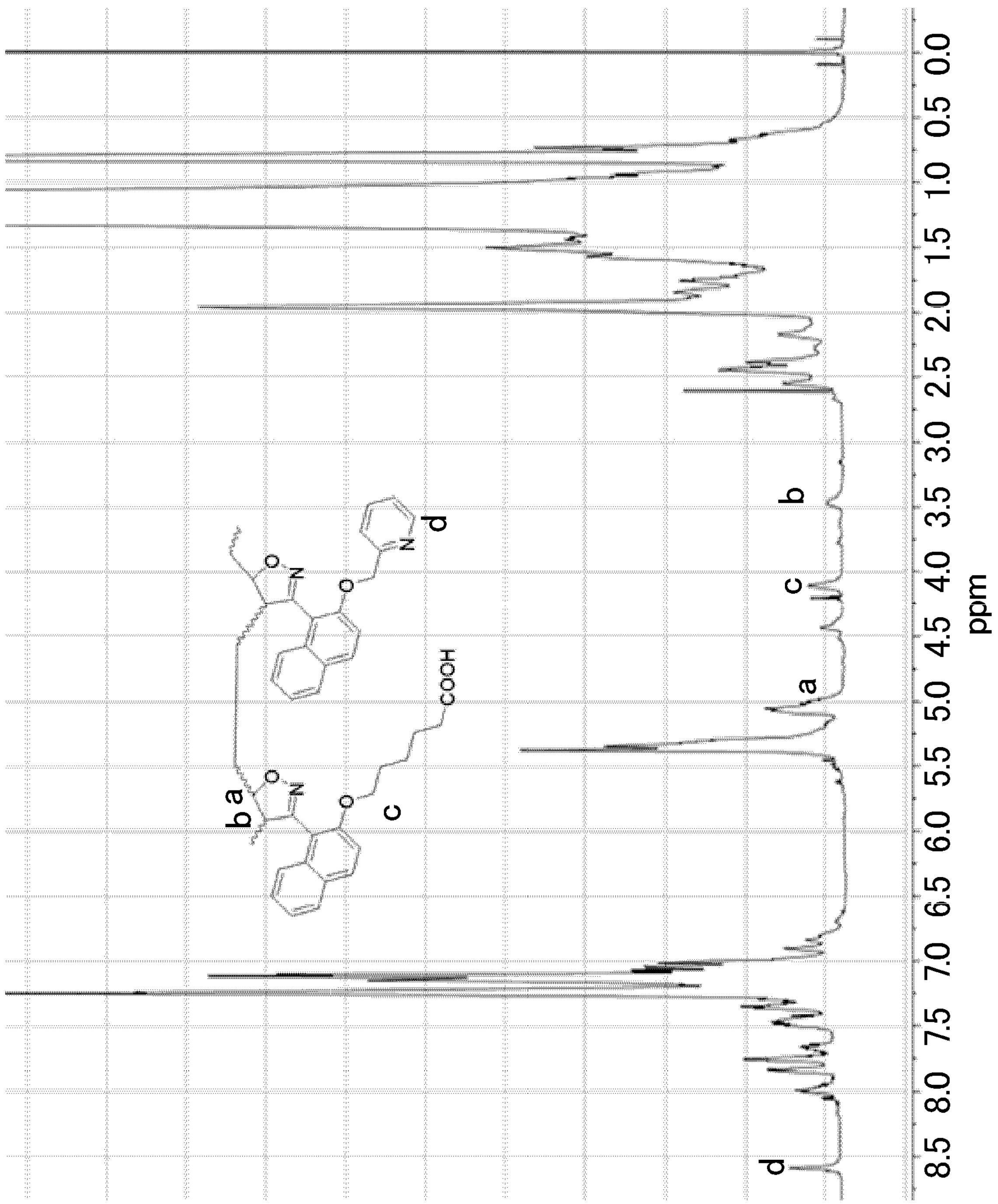

Europäisches Patentamt
European Patent Office
Office européen des brevets

# EUROPEAN SEARCH REPORT

Application Number
EP 25 18 8326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 328 046 A1 (SUMITOMO RUBBER IND [JP]) 28 February 2024 (2024-02-28)<br>* claims 1, 6, 9, 12 *<br>----- | 1-15 | INV.<br>B60C1/00<br>C08C19/02<br>C08C19/22<br>C08L15/00 |
| A | WO 2016/039005 A1 (SUMITOMO RUBBER IND [JP]) 17 March 2016 (2016-03-17)<br>* formula (1);<br>claims 1,7 *<br>----- | 1-15 | |
| A | EP 3 181 629 A1 (SUMITOMO RUBBER IND [JP]) 21 June 2017 (2017-06-21)<br>* claims 1-6 *<br>----- | 1-15 | |
| A | JP 2008 208163 A (BRIDGESTONE CORP) 11 September 2008 (2008-09-11)<br>* claims 1,5,8; table 1 *<br>----- | 1-15 | |

| TECHNICAL FIELDS SEARCHED (IPC) |
|---|
| B60C<br>C08C<br>C08L |

The present search report has been drawn up for all claims

1

| Place of search | Date of completion of the search | Examiner |
|---|---|---|
| Munich | 18 September 2025 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 18 8326

This annex lists the patent family members relating to the patent documents cited in the above-mentioned European search report. The members are as contained in the European Patent Office EDP file on The European Patent Office is in no way liable for these particulars which are merely given for the purpose of information.

18-09-2025

| Patent document cited in search report | Publication date | Patent family member(s) | Publication date |
|---|---|---|---|
| EP 4328046 A1 | 28-02-2024 | CN 117242053 A | 15-12-2023 |
| | | EP 4328046 A1 | 28-02-2024 |
| | | JP 7726272 B2 | 20-08-2025 |
| | | JP WO2022244317 A1 | 24-11-2022 |
| | | WO 2022244317 A1 | 24-11-2022 |
| WO 2016039005 A1 | 17-03-2016 | CN 106574079 A | 19-04-2017 |
| | | EP 3178878 A1 | 14-06-2017 |
| | | JP 6627512 B2 | 08-01-2020 |
| | | JP WO2016039005 A1 | 15-06-2017 |
| | | US 2017226233 A1 | 10-08-2017 |
| | | WO 2016039005 A1 | 17-03-2016 |
| EP 3181629 A1 | 21-06-2017 | CN 106661282 A | 10-05-2017 |
| | | EP 3181629 A1 | 21-06-2017 |
| | | JP 6801183 B2 | 16-12-2020 |
| | | JP WO2016039007 A1 | 15-06-2017 |
| | | US 2017226325 A1 | 10-08-2017 |
| | | WO 2016039007 A1 | 17-03-2016 |
| JP 2008208163 A | 11-09-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019065240 A
- WO 2016039005 A
- JP 2009002594 A

### Non-patent literature cited in the description


- *Akita Prefectural University Web Journal B*, 2019, vol. 6, 216-222